# EUROPÄISCHE PATENTSCHRIFT

(11) **EP 2 501 746 B1**
(45) Veröffentlichungstag und Bekanntmachung des Hinweises auf die Patenterteilung: **23.10.2013**
(21) Anmeldenummer: 10708103.6
(22) Anmeldetag: 08.02.2010
(51) Int. Cl.: C08J 3/205, C08K 3/04, C08K 7/24, H01B 1/24, C08J 5/00, B82Y 30/00

(54) **VERFAHREN ZUR HERSTELLUNG VON KOMPOSITMATERIALIEN AUF BASIS VON POLYMEREN UND KOHLENSTOFFNANORÖHREN (CNTS) UND AUF DIESE WEISE HERGESTELLTE KOMPOSITMATERIALIEN SOWIE DEREN VERWENDUNG**
METHOD FOR PRODUCING COMPOSITE MATERIALS BASED ON POLYMERS AND CARBON NANOTUBES (CNTS), AND COMPOSITE MATERIALS PRODUCED IN THIS MANNER AND THE USE THEREOF
PROCÉDÉ DE PRODUCTION DE MATÉRIAUX COMPOSITES À BASE DE POLYMÈRES ET DE NANOTUBES DE CARBONE (CNT), ET MATÉRIAUX COMPOSITES AINSI PRODUITS, AINSI QUE LEUR UTILISATION

(30) Priorität: 18.11.2009 EP 09008217; 18.11.2009 EP 09008218; 20.01.2010 EP 10000323; 02.02.2010 EP 10000622
(43) Veröffentlichungstag der Anmeldung: 26.09.2012
(73) Patentinhaber: Bada AG, 77815 Bühl/Baden (DE); BYK-Chemie GmbH, 46483 Wesel (DE); Coperion GmbH, 70469 Stuttgart (DE); Fraunhofer Gesellschaft zur Förderung der angewandten Forschung e.V., 80636 München (DE)
(72) Erfinder: BACHER, Alexander, 76646 Bruchsal (DE); BERKEI, Michael, 45721 Haltern am See (DE); POTYRA, Eva, 76133 Karlsruhe (DE); DIEMERT, Jan, 76327 Pfinztal (DE); WILLING, Nadine, 46446 Emmerich (DE); LÜSSENHEIDE, Susanne, 75015 Bretten (DE); METZGER, Jörg, 71229 Leonberg (DE); MEYER, Helmut, 51519 Odenthal (DE); SAWITOWSKI, Thomas, 46483 Wesel (DE); SCHUNKE, Boris, 77815 Bühl/Baden (DE); TECKLENBURG, Janin, 46119 Oberhausen (DE); ZANKI, Adrian, 76707 Hambrücken (DE); MIKONSAARI, Irma, 76327 Pfinztal (DE)
(74) Vertreter: Von Rohr
(86) Internationale Anmeldenummer: PCT/EP2010/000757
(87) Internationale Veröffentlichungsnummer: WO 2011/060839

(56) Entgegenhaltungen:
- EP-A1- 1 785 447
- WO-A2-2008/041965
- US-A1- 2007 096 083
- US-A1- 2007 213 450

## Beschreibung

Die vorliegende Erfindung betrifft ein Verfahren zur Herstellung von Kompositmaterialien auf Basis von mindestens einem Polymer einerseits und Kohlenstoffnanoröhren (CNTs) andererseits und die auf diese Weise erhältlichen Kompositmaterialien sowie deren Verwendung.

Kohlenstoffnanoröhren, synonym auch als Kohlenstoffnanotubes (engl. carbon nanotubes = CNTs) etc. bezeichnet, sind mikroskopisch kleine röhrenförmige Gebilde (d. h. molekulare Nanoröhren) aus Kohlenstoff. Ihre Wände bestehen - wie die der Fullerene oder wie die Ebenen des Graphits - im wesentlichen ausschließlich aus Kohlenstoff, wobei die Kohlenstoffatome eine wabenartige Struktur mit Sechsecken und jeweils drei Bindungspartnern einnehmen, welche durch die sp²-Hybridisierung der Kohlenstoffatome vorgegeben ist.

Kohlenstoffnanoröhren leiten sich somit von den Kohlenstoffebenen des Graphits ab, welche sozusagen zu einer Röhre aufgerollt sind: Die Kohlenstoffatome bilden eine wabenartige, hexagonale Struktur mit jeweils drei Bindungspartnem. Röhren mit ideal hexagonaler Struktur haben eine einheitliche Dicke und sind linear; es sind aber auch geknickte oder sich verengende Röhren möglich, die fünfeckige Kohlenstoffringe enthalten. Je nachdem, wie das Wabennetz des Graphits zur Röhre gerollt wird ("gerade" oder "schräg"), entstehen helikale (d. h. schraubenartig gewundene) und auch nichtspiegelsymmetrische, also chirale Strukturen.

Man unterscheidet zwischen einwandigen Kohlenstoffnanoröhren (engl. single-wall carbon nanotubes = SWCNTs bzw. SWNTs) und mehrwandigen Kohlenstoffnanoröhren (engl. multiwall carbon nanotubes = MWCNTs bzw. MWNTs), zwischen offenen oder geschlossenen Kohlenstoffnanoröhren (d. h. mit einem "Deckel", der z. B. einen Ausschnitt aus einer Fullerenstruktur hat) sowie zwischen leeren und gefüllten (beispielsweise mit Silber, flüssigem Blei, Edelgasen etc.) Kohlenstoffnanoröhren.

Der Durchmesser der Kohlenstoffnanoröhren (CNTs) liegt im Bereich von wenigen Nanometern (z. B. 1 bis 50 nm), aber es wurden auch schon Kohlenstoffnanoröhren (CNTs) mit Durchmessern der Röhren von nur 0,4 nm hergestellt. Längen von mehreren Mikrometern bis Millimetern für einzelne Röhren und bis zu einigen Zentimetern für Röhrenbündel wurden bereits erreicht.

Unter Kohlenstoffnanoröhren (CNTs) werden nach dem Stand der Technik insbesondere zylinderförmige Kohlenstoffröhren mit einem Durchmesser beispielsweise zwischen 3 und 100 nm verstanden und einer Länge, die ein Vielfaches des Durchmessers beträgt. Diese Röhrchen bestehen aus einer oder mehreren Lagen geordneter Kohlenstoffatome und weisen einen in der Morphologie unterschiedlichen Kern auf. Diese Kohlenstoffnanoröhren werden synonym beispielsweise auch als "carbon fibrils", "hollow carbon fibres" oder dergleichen bezeichnet.

In der Fachliteratur sind Kohlenstoffnanoröhren seit langem bekannt. Obwohl Iijima (vgl. Publikation: S. Iijima, Nature 354, 56-58, 1991) allgemein als Entdecker der Nanoröhren bezeichnet wird, sind diese Materialien, insbesondere faserförmige Graphitmaterialien mit mehreren Graphitschichten, schon seit den 1970er bzw. frühen 1980er Jahren bekannt. Tates und Baker (vgl. GB 1 469 930 A1 oder EP 0 056 004 A2) beschreiben erstmals die Abscheidung von sehr feinem faserförmigem Kohlenstoff aus der katalytischen Zersetzung von Kohlenwasserstoffen. Allerdings werden die auf Basis kurzkettiger Kohlenwasserstoffe hergestellten Kohlenstoff-Filamente nicht näher in bezug auf ihren Durchmesser charakterisiert.

Übliche Strukturen dieser Kohlenstoffnanoröhren sind insbesondere solche vom Zylindertyp. Wie zuvor beschrieben, wird insbesondere bei den zylindrischen Strukturen zwischen den einwandigen Monokohlenstoffnanoröhren ("single-wall carbon nanotubes") und den mehrwandigen zylindrischen Kohlenstoffnanoröhren ("multiwall carbon nanotubes) unterschieden. Übliche Verfahren zu ihrer Herstellung sind z. B. Lichtbogenverfahren ("arc discharge"), Laserablation ("laser ablation"), chemische Abscheidung aus der Dampfphase ("CVD process") und katalytisch-chemische Abscheidung aus der Dampfphase ("CCVD process").

Aus Iijima, Nature 354, 1991, 56-8, ist die Bildung von Kohlenstoffiöhren im Lichtbogenverfahren bekannt, die aus zwei oder mehr Graphenlagen bestehen und zu einem nahtlos geschlossen Zylinder aufgerollt und ineinander geschachtelt sind. Abhängig vom Aufrollvektor sind chirale und achirale Anordnungen der Kohlenstoffatome im Verhältnis zu der Längsachse der Kohlenstoff-Faser möglich.

Strukturen von Kohlenstoffröhren, bei denen eine einzelne zusammenhängende Graphenlage (sogenannter "scroll type" oder "Scroll-Typ") oder unterbrochene Graphenlage (sogenannter "onion type" oder "Zwiebel(struktur)typ") die Basis für den Aufbau der Nanoröhren ist, wurden erstmals von Bacon et al., J. Appl. Phys. 34, 1960, 283-90, beschrieben. Später wurden entsprechende Strukturen auch von Zhou et al., Science, 263, 1994, 1744-47, sowie von Lavin et al., Carbon 40, 2002, 1123-30, gefunden.

Kohlenstoffnanoröhren (CNTs) sind kommerziell verfügbar und werden von verschiedenen Herstellern angeboten (z. B. von der Bayer MaterialScience AG, Deutschland, der CNT Co. Ltd., China, der Cheap Tubes Inc., USA, und der Nanocyl S.A., Belgien). Entsprechende Herstellungsverfahren sind dem Fachmann geläufig. So lassen sich Kohlenstoffnanoröhren (CNTs) beispielsweise durch Lichtbogenentladung z. B. zwischen Kohlenstoffelektroden, ausgehend von Graphit mittels Laserabtragung ("Verdampfen") oder durch katalytische Zersetzung von Kohlenwasserstoffen (engl. *chemical vapor deposition*, kurz CVD) herstellen.

Je nach Detail der Struktur ist die elektrische Leitfähigkeit innerhalb der Kohlenstoffnanoröhren metallisch oder halbleitend. Es sind auch Kohlenstoffnanoröhren bekannt, welche bei tiefen Temperaturen supraleitend sind.

Es wurden bereits Transistoren und einfache Schaltungen mit halbleitenden Kohlenstoffnanoröhren hergestellt. Auch wurde bereits versucht, komplexe Schaltkreise aus verschiedenen Kohlenstoffnanoröhren gezielt herzustellen. Die mechanischen Eigenschaften von Kohlenstoffnanoröhren sind überragend: CNTs haben - bei einer Dichte von z. B. 1,3 bis 1,4 g/cm³ - eine enorme Zugfestigkeit von mehreren Megapascal; im vergleich hierzu hat Stahl bei einer Dichte von mindestens 7,8 g / cm³ eine maximale Zugfestigkeit von nur etwa 2 MPa, woraus sich für einzelne CNTs rechnerisch ein mindestens 135mal besseres Verhältnis von Zugfestigkeit zu Dichte als für Stahl ergibt.

Für den Bereich der Elektronik sind vor allem die Strombelastbarkeit und die elektrische wie Wärmeleitfähigkeit interessant: Die Strombelastbarkeit liegt schätzungsweise 1000mal höher als bei Kupferdrähten, während die Wärmeleitfähigkeit bei Raumtemperatur beinahe doppelt so hoch wie die von Diamant ist. Da CNTs auch Halbleiter sein können, lassen sich aus ihnen hervorragende Transistoren fertigen, die höhere Spannungen und Temperaturen - und damit höhere Taktfrequenzen - als Siliziumtransistoren aushalten; funktionsfähige Transistoren aus CNTs wurden bereits hergestellt. Des weiteren können mit Hilfe von CNTs nichtflüchtige Speicher realisiert werden. Auch können CNTs im Bereich der Meßtechnik (z. B. Rastertunnelmikroskope) verwendet werden.

Aufgrund ihrer mechanischen und elektrischen Eigenschaften können Kohlenstoffnanoröhren auch in Kunststoffen Anwendung finden: Dadurch werden beispielsweise die mechanischen Eigenschaften der Kunststoffe stark verbessert. Außerdem ist es möglich, auf diese Weise elektrisch leitende Kunststoffe herzustellen.

Die zuvor beschriebenen Eigenschaften der Kohlenstoffhanoröhren (CNTs) und die hieraus erwachsenden Anwendungsmöglichkeiten haben ein großes Interesse hervorgerufen.

Insbesondere besteht für eine Reihe von Anwendungen ein Bedarf, die Kohlenstoffnanoröhren (CNTs) zusammen mit Kunststoffen bzw. organischen Polymeren in Form von sogenannten Verbund- oder Kompositmaterialien bereitzustellen.

Im Stand der Technik hat es daher nicht an Versuchen gefehlt, Verbund- oder Kompositmaterialien auf Basis von Kunststoffen bzw. organischen Polymeren einerseits und Kohlenstoffnanoröhren (CNTs) andererseits herzustellen.

So betrifft die WO 2008/041965 A2 eine polymere Zusammensetzung, welche mindestens ein organisches Polymer und Kohlenstoffnanoröhren (CNTs) umfaßt, wobei das betreffende Kompositmaterial durch Eintrag von Kohlenstoffnanoröhren (CNTs) in eine Schmelze des Polymers unter Homogenisierung hergestellt wird. Auf diese Weise lassen sich jedoch nur geringe Füllgrade erreichen, so daß nur unzureichende elektrische Eigenschaften, insbesondere Oberflächen- und Volumenwiderstände, erhalten werden. Zudem ist eine Homogenisierung des Eintrags nur unzureichend möglich, so daß ein relativ inhomogenes Material erhalten wird.

In gleicher Weise betrifft auch die WO 2008/047022 A1 Kompositmaterialien auf Basis von thermoplastischen Polymeren und Kohlenstoffnanoröhren (CNTs), wobei diese Kompositmaterialien gleichermaßen durch Eintrag von Kohlenstoffnanoröhren (CNTs) in eine polymere Schmelze, beispielsweise mittels Spritzguß- oder Extrusionsverfahren, erhalten wird, einhergehend mit den zuvor geschilderten Nachteilen.

C.-L. Yin et al., "Crystallization and morphology of iPP/MWCNT prepared by compounding iPP melt with MBCNT acqueous suspension", Colloid. Polym. Sci., 2009, beschreiben die Compoundierung von isotaktischem Polypropylen und mehrwandigen Kohlenstoffnanoröhren (MWCNTs) in Form einer wäßrigen Suspension, wobei die erhaltenen Füllgrade nur sehr gering ausfallen und zudem keinerlei elektrischen Eigenschaften der resultierenden Materialien beschrieben werden.

A.P. Kumar et al., "Nanoscale particles for polymer degradation and stabilization - Trans and future perspectives", Progress in Polymer Science 34 (2009), 479-515, beschreiben ganz allgemein Nanokomposite auf Basis von Polymeren und Nanopartikeln aller Art. Der Artikel befaßt sich aber nicht speziell mit der Problematik der Compoundierung von Kohlenstoffnanoröhren (CNTs) mit polymeren Kunststoffen.

Die US 2007/0213450 A1 betrifft ein Verfahren zur Herstellung von Nanoröhren oder Fasern enthaltende Kompositmaterialien durch Inkontaktbringen von Dispersionen von Nanoröhren mit Polymerschmelzen. Dabei wird im Allgemeinen eine Dispersion von Nanoröhren mit der Polymerschmelze unter Entfernen der flüssigen Phase der Nanoröhrendispersion vermischt. Zusammenfassend ist die Herstellung von Kompositmaterialien auf der Basis von organischen Polymeren und Kohlenstoffnanoröhren (CNTs) bislang im Stand der Technik nicht in zufriedenstellender Weise gelöst worden. Insbesondere weisen die resultierenden Kompositmaterialien nur unzureichende Füllgrade, zumal zumeist verbunden mit hohen Inhomogenitäten, und nur unzureichende elektrische wie mechanische Eigenschaften auf.

Der vorliegenden Erfindung liegt daher die Aufgabe zugrunde, ein Verfahren zur Herstellung von Komposit- bzw. Verbundmaterialien auf Basis von Polymeren bzw. Kunststoffen einerseits und Kohlenstoffnanoröhren (CNTs) andererseits sowie die entsprechenden Verbund- bzw. Kompositmaterialien bereitzustellen, wobei insbesondere die zuvor geschilderten, mit dem Stand der Technik verbundenen Nachteile zumindest teilweise vermieden oder aber wenigstens abgeschwächt werden sollen.

Insbesondere ist eine Aufgabe der vorliegenden Erfindung die Bereitstellung eines Herstellungsverfahrens für Komposit- bzw. Verbundmaterialien, welche organische Polymere bzw. Kunststoffe und Kohlenstoffnanoröhren (CNTs) umfassen, wobei das Verfahren gegenüber dem Stand der Technik eine verbesserte Reproduzierbarkeit aufweist, insbesondere die Realisierung höherer Füllgrade an Kohlenstoffnanoröhren (CNTs) und/oder verbesserte Homogenität ermöglichst.

Eine weitere Aufgabe der vorliegenden Erfindung ist die Bereitstellung von Verbund- bzw. Kompositmaterialien auf Basis organischer Polymere bzw. Kunststoffe und Kohlenstoffnanoröhren (CNTs) der vorgenannten Art mit verbesserten Eigenschaften, insbesondere mit erhöhten Füllgraden an Kohlenstoffnanoröhren (CNTs) und/oder verbesserten Homogenitäten und/oder verbesserten mechanischen und/oder elektrischen Eigenschaften.

Zur Lösung des zuvor geschilderten Problems schlägt die vorliegende Erfindung somit ein Verfahren nach Patentanspruch 1 vor; weitere, vorteilhafte Eigenschaften des erfindungsgemäßen Verfahrens sind Gegenstand der diesbezüglichen Verfahrensunteransprüche.

Weiterer Gegenstand der vorliegenden Erfindung sind nach dem erfindungsgemäßen Verfahren erhältliche Verbund- bzw. Kompositmaterialien, wie sie in den entsprechenden, auf die Verbund- bzw. Kompositmaterialien gerichteten Patentansprüchen beschrieben bzw. definiert sind; weitere, vorteilhafte Ausgestaltungen der erfindungsgemäßen Verbund- bzw. Kompositmaterialien sind Gegenstand der diesbezüglichen Unteransprüche.

Schließlich ist ein weiterer Gegenstand der vorliegenden Erfindung die Verwendung der nach dem erfindungsgemäßen Verfahren erhältlichen Verbund- bzw. Kompositmaterialien, wie sie in den entsprechenden Verwendungsansprüchen beschrieben bzw. definiert ist.

Es versteht sich von selbst, daß besondere Ausgestaltungen und Ausführungsformen, welche nur im Zusammenhang mit einem Erfindungsaspekt beschrieben sind, auch in bezug auf die anderen Erfindungsaspekte entsprechend gelten, ohne daß dies ausdrücklich erwähnt ist.

Bei allen nachstehend genannten relativen bzw. prozentualen, insbesondere gewichtsbezogenen Mengenangaben ist zu beachten, daß diese Angaben im Rahmen der erfindungsgemäßen Zusammensetzung vom Fachmann derart auszuwählen bzw. zu kombinieren sind, daß in der Summe - gegebenenfalls unter Einbeziehung weiterer Komponenten bzw. Inhaltsstoffe bzw. Zusatzstoffe bzw. Bestandteile, insbesondere wie nachfolgend beschrieben - stets 100 % bzw. 100 Gew.-% resultieren. Dies versteht sich für den Fachmann aber von selbst.

Im übrigen gilt, daß der Fachmann anwendungsbezogen oder einzelfallbedingt von den nachfolgend angegebenen Werten-, Mengen- und Bereichsangaben anwendungsbezogen oder einzelfallbedingt abweichen kann, ohne daß er den Rahmen der vorliegenden Erfindung verläßt.

Gegenstand der vorliegenden Erfindung - gemäß einem **ersten Aspekt** der vorliegenden Erfindung - ist somit ein Verfahren zur Herstellung eines Kompositmaterials auf Basis von mindestens einem Polymer einerseits und Kohlenstoffnanoröhren (CNTs) andererseits, wobei das Verfahren die folgenden Verfahrensschritte umfaßt:
(a) Bereitstellen einer Dispersion oder Lösung von Kohlenstoffnanoröhren (CNTs) in einer kontinuierlichen flüssigen Phase durch Dispergieren oder Solubilisieren von Kohlenstoffnanoröhren (CNTs) in einem Dispersions- oder Lösemittel,
   wobei die Herstellung der Dispersion oder Lösung in Verfahrensschritt (a) durch Mischen in der kontinuierlichen Phase unter Druckeintrag und/oder Ultraschalleintrag erfolgt und wobei die Kohlenstoffnanoröhren (CNTs) in einer Konzentration von 0,001 bis 30 Gew.-%, bezogen auf die resultierende Dispersion oder Lösung, eingesetzt werden; nachfolgend
(b) Eintragen der in Verfahrensschritt (a) hergestellten Dispersion oder Lösung von Kohlenstoffnanoröhren (CNTs) in die Schmelze mindestens eines Polymers unter Homogenisierung und unter Entfernung der kontinuierlichen flüssigen Phase,
   wobei das Eintragen der in Verfahrensschritt (a) hergestellten Dispersion oder Lösung von Kohlenstoffnanoröhren (CNTs) in die Schmelze des Polymers mittels einer Förder- und/oder Dosierpumpe unter Druckbeaufschlagung und mit konstanter Dosiergeschwindigkeit und/oder konstanter Dosiergenauigkeit erfolgt, wobei Verfahrensschritt (b) in einer Extrusionsvorrichtung erfolgt, wobei die Extrusionsvorrichtung Mischeinrichtungen zur Homogenisierung der in Verfahrensschritt (a) bereitgestellten Dispersion oder Lösung von Kohlenstoffnanoröhren (CNTs) mit der Schmelze des Polymers und eine Entgasungseinrichtung zu Zwecken der Entfernung der kontinuierlichen Phase aufweist, und
   wobei ein Restgehalt an kontinuierlicher Phase von höchstens 1 Gew.-%, bezogen auf das Endprodukt, eingestellt wird; dann
(c) Abkühlenlassen der in Verfahrensschritt (b) erhaltenen Mischung aus geschmolzenem Polymer und Kohlenstoffnanoröhren (CNTs) bis zum Erstarren des Polymers und nachfolgender Erhalt eines Kompositmaterials, welches mindestens ein Polymer und Kohlenstoffnanoröhren (CNTs) umfaßt.

Die Anmelderin hat überraschenderweise herausgefunden, daß sich mit dem zuvor geschilderten Verfahren in effizienter Weise Verbund- bzw. Kompositmaterialien herstellen lassen, welche mindestens ein organisches Polymer bzw. einen organischen Kunststoff einerseits und Kohlenstoffnanoröhren (CNTs) andererseits umfassen.

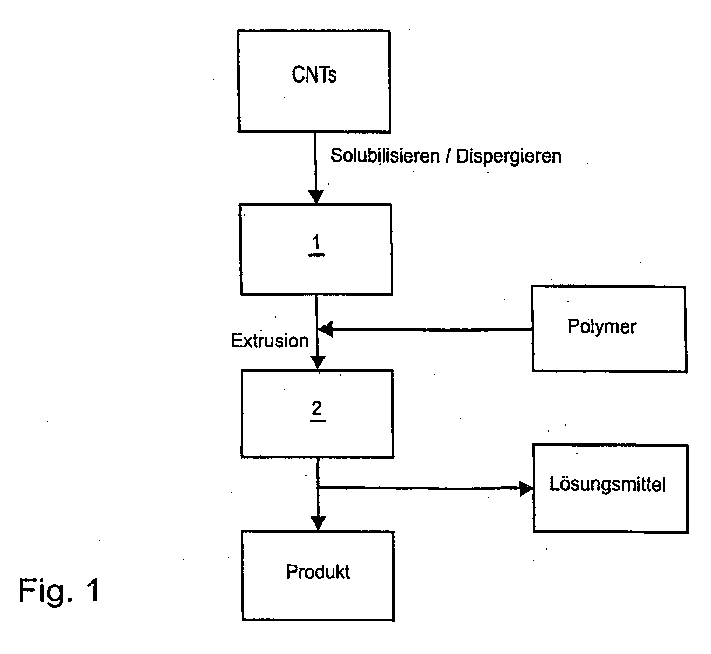

Der erfindungsgemäße Verfahrensablauf ist beispielhaft gemäß einer Ausführungsform in Fig. 1 veranschaulicht.

Es zeigt:
- Fig. 1: einen schematischen Ablauf des erfindungsgemäßen Verfahrens gemäß einem besonderen Ausführungsbeispiel.

Fig. 1 zeigt schematisch den Ablauf des erfindungsgemäßen Verfahrens: In einem ersten Verfahrensschritt (a) werden zunächst Kohlenstoffnanoröhren (CNTs) in einer kontinuierlichen, im allgemeinen unter Verfahrensbedingungen flüssigen Phase, insbesondere in einem Dispersions- oder Lösemittel, dispergiert bzw. solubilisiert, so daß eine betreffende Dispersion bzw. Lösung von Kohlenstoffnanoröhren (CNTs) in der kontinuierlichen, im allgemeinen flüssigen Phase resultiert (vgl. 1 von Fig. 1). Nachfolgend wird in einem zweiten Verfahrensschritt (b) die zuvor hergestellte Dispersion bzw. Lösung von Kohlenstoffnanoröhren (CNTs) in die Schmelze mindestens eines Polymers bzw. Kunststoffs unter Homogenisierung, insbesondere Mischen, eingetragen (vgl. 2 von Fig. 1), gefolgt von einer Entfernung der kontinuierlich flüssigen Phase (Dispersions- oder Lösungsmittel), was vorzugsweise unter Extrusionsbedingungen in einer entsprechenden Extrusionsvorrichtung, wie nachfolgend noch im Detail beschrieben, erfolgt. Abschließend wird nach Entfernung der kontinuierlichen, insbesondere flüssigen Phase, insbesondere des Dispersions- oder Lösungsmittels, eine Mischung aus geschmolzenem Polymer und Kohlenstoffnanoröhren (CNTs) erhalten, welche in einem abschließenden Verfahrensschritt (c) bis zum Erstarren des Polymers abkühlengelassen wird. Man erhält ein erfindungsgemäßes Verbund- bzw. Kompositmaterial, welches mindestens ein im allgemeinen organisches Polymer bzw. einen im allgemeinen organischen Kunststoff einerseits und Kohlenstoffnanoröhren (CNTs) andererseits umfaßt.

Die Formulierung "Bereitstellen einer Dispersion oder Lösung von Kohlenstoffnanoröhren (CNTs) in einer kontinuierlichen flüssigen Phase" gemäß Verfahrensschritt (a) des erfindungsgemäßen Verfahrens umfaßt aber auch die Möglichkeit, entsprechende handelsübliche bzw. kommerziell verfügbare Dispersionen oder Lösungen von Kohlenstoffnanoröhren (CNTs) in einer kontinuierlichen, vorzugsweise flüssigen Phase einzusetzen, wie sie beispielsweise von der Belgium Nanocyl S.A., Sambreville, Belgien, oder der FutureCarbon GmbH, Bayreuth, Deutschland, vertrieben werden.

Das erfindungsgemäße Verfahren ermöglicht eine besonders gute Homogenisierung in bezug auf die Verteilung der Kohlenstoffnanoröhren (CNTs) in das organische Polymer bzw. den organischen Kunststoff, da die Kohlenstoffnanoröhren (CNTs) nicht in Masse, sondern in verdünnter Form (nämlich in Form einer Dispersion bzw. Lösung) in die Schmelze des Polymers eingetragen werden. Weiterhin ermöglicht das erfindungsgemäße Verfahren relativ hohe Füllgrade an Kohlenstoffnanoröhren (CNTs), was zu verbesserten elektrischen Eigenschaften, insbesondere Oberflächen- und Volumenwiderständen, der erhaltenen Komposit- bzw. Verbundmaterialien führt. Aufgrund der vorgenannten homogenen, besonders gleichmäßigen Verteilung werden gleichermaßen verbesserte mechanische Eigenschaften, wie z. B. Biege-, Kerbschlag- und weitere Festigkeiten, der resultierenden Komposit- bzw. Verbundmaterialien erhalten. Auch ist das erfindungsgemäße Verfahren universell auf eine nahezu unbegrenzte Vielzahl von Polymeren bzw. Kunststoffen anwendbar.

Das erfindungsgemäß eingesetzte Polymer ist im allgemeinen ein thermoplastisches Polymer. Insbesondere wird das erfindungsgemäße eingesetzte Polymer ausgewählt aus der Gruppe von Polyamiden, Polyacetaten, Polyketonen, Polyolefinen, Polycarbonaten, Polystyrolen, Polyestern, Polyethern, Polysulfonen, Polyfluorpolymeren, Polyurethanen, Polyamidimiden, Polyarylaten, Polyarylsylfonen, Polyethersylfonen, Polyarylsulfiden, Polyvinylchloriden, Polyetherimiden, Polytetrafluorethylenen, Polyetherketonen, Polylactaten sowie deren Mischungen und Copolymeren.

In erfindungsgemäß bevorzugter Weise ist das erfindungsgemäß eingesetzte Polymer ausgewählt aus thermoplastischen Polymeren, vorzugsweise aus der Gruppe von Polyamiden; Polyolefinen, insbesondere Polyethylen und/oder Polypropylen; Polyethylenterephtalaten (PET) und Polybutylenterephtalaten (PBT); thermoplastischen Elastomeren (TPE), insbesondere thermoplastischen Elastomeren auf Olefinbasis (TPE-O oder TPO), vernetzten thermoplastischen Elastomeren auf Olefinbasis (TPE-V oder TPV), thermoplastischen Elastomeren auf Urethanbasis (TPE-U oder TPU), thermoplastischen Copolyestern (TPE-E oder TPC), thermoplastischen Styrol-Blockcopolymeren (TPE-S oder TPS), thermoplastischen Copolyamiden (TPE-A oder TPA); thermoplastischem Acrylnitril/Butadien/Styrol (ABS); Polylactaten (PLA); Polymethyl(meth)acrylaten (PMA oder PMMA); Polyphenylensulfiden (PPS); sowie deren Mischungen und Copolymeren.

Das Dispergieren bzw. Solubilisieren von Kohlenstoffnanoröhren (CNTs) in einer kontinuierlichen, insbesondere flüssigen Phase ist dem Fachmann an sich aus dem Stand der Technik bekannt. In diesem Zusammenhang kann beispielsweise auf die folgenden Druckschriften verwiesen werden: EP 1 359 121 A2, JP 2005-089738 A, JP 2007-169120 A, WO 2008/058589 A2 bzw. das entsprechende deutsche Äquivalent (Patentfamilienmitglied) DE 10 2006 055 106 A1, FR 2 899 573 A1 und US 2008/ 0076837 A1.

Üblicherweise kann die Herstellung der Dispersion bzw. Lösung der Kunststoffnanoröhren (CNTs) in Verfahrensschritt (a) unter Energieeintrag, insbesondere auch unter Druckbeaufschlagung und/oder unter Ultraschalleintrag, erfolgen.

Erfindungsgemäß kann die Herstellung der Dispersion oder Lösung in Verfahrensschritt (a) durch Mischen in der Flüssigphase unter Druckeintrag erfolgen, insbesondere mittels Hochdruckscherdispergierung oder durch Rührwerkskugelmühlenvermahlung, wie nachfolgend noch ausgeführt. Des weiteren kann die Herstellung der Dispersion oder Lösung in Verfahrensschritt (a) auch unter Ultraschalleintrag erfolgen.

Insbesondere hat es sich im Rahmen der vorliegenden Erfindung bewährt, wenn das in Verfahrensschritt (a) durchgeführte Dispergieren oder Solubilisieren der Kohlenstoffnanoröhren (CNTs) in einer Rührwerkskugelmühle und/oder unter Ultraschalleintrag erfolgt, insbesondere unter einem Eintrag von Energie, insbesondere Mahlenergie, im Bereich von 5.000 bis 50.000 kWh/to Feststoff (CNTs), vorzugsweise 5.000 bis 20.000 kWh/to Feststoff (CNTs); derartige Vorrichtungen werden beispielsweise von der Hosokawa Alpina AG, Augsburg, Deutschland, angeboten. Alternativ besteht jedoch auch die Möglichkeit, das in Verfahrensschritt (a) durchgeführte Dispergieren oder Solubilisieren der Kohlenstoffnanoröhren (CNTs) mittels Hochdruckscherdispergierung zu realisieren. Die vorgenannten Dispergier- bzw. Solubilisierungstechniken ermöglichen die Realisierung möglichst hoher Gehalte an Feststoff (CNTs), insbesondere in kurzen Zeiten.

Wenn das in Verfahrensschritt (a) durchgeführte Dispergieren oder Solubilisieren der Kohlenstoffnanoröhren (CNTs) mit einem hohen Energieeintrag erfolgt, insbesondere in der zuvor geschilderten Weise, lassen sich besonders gute Endprodukte erhalten, insbesondere erfindungsgemäße Kompositmaterialien mit guter bis ausgezeichneter elektrischer Leitfähigkeit und gleichzeitig guten bis ausgezeichneten mechanischen Eigenschaften, wie z. B. guter bis ausgezeichneter mechanischer Belastbarkeit.

Besonders gute Ergebnisse, insbesondere erfindungsgemäße Kompositmaterialien mit guter bis ausgezeichneter elektrischer Leitfähigkeit und gleichzeitig guten bis ausgezeichneten mechanischen Eigenschaften, werden dann erhalten, wenn das in Verfahrensschritt (a) durchgeführte Dispergieren oder Solubilisieren der Kohlenstoffnanoröhren (CNTs) derart durchgeführt wird, daß die resultierende Dispersion bzw. Lösung eine geringe Partikel- oder Agglomeratgröße der Kohlenstoffnanoröhren (CNTs) aufweist, wobei insbesondere Partikel- bzw. Agglomeratgrößen der Kohlenstoffnanoröhren (CNTs), bestimmt als d90-Wert (z. B. Bestimmung mittels Laserbeugung), von höchstens 100 µm, vorzugsweise von höchstens 50 µm, besonders bevorzugt von höchstens 20 µm, ganz besonders bevorzugt von höchstens 10 µm, noch mehr bevorzugt von höchstens 5 µm, eingesetzt bzw. erhalten werden.

Wenn die resultierende Dispersion bzw. Lösung eine geringe Partikel- oder Agglomeratgröße der Kohlenstoffnanoröhren (CNTs) aufweist, führt dies bei der nachfolgenden Einarbeitung in die Polymerschmelze gemäß Verfahrensschritt (b) zu einer besonders guten Verteilung bzw. Homogenisierung, d. h. die gute und homogene Verteilung der CNTs im Polymer und somit in den Endprodukten, d. h. in den erfindungsgemäßen Kompositmaterialien, ist insbesondere durch die Vordispergierung bzw. Vorsolubilisierung der CNTs in Verfahrensschritt (a) zu erreichen, insbesondere mit besonders feinteiligen CNT-Dispersionen bzw. CNT-Lösungen, wie zuvor geschildert. Dabei werden im Vergleich zum Stand der Technik, insbesondere gegenüber einem Eintrag von CNTs in Masse bzw. in Agglomeratform (d. h. ohne Vordispergierung), bessere elektrische Leitfähigkeiten bei gering(er)en CNT-Konzentrationen bzw. CNT-Beladungsgraden erreicht. Durch die feinteilige, insbesondere nanopartikuläre Form der eingetragenen CNTs werden zudem verbesserte mechanische Eigenschaften erhalten; die in die Polymere eingearbeiteten CNTs sind feinteilig bzw. klein genug, um keine gewöhnliche Füllstoffwirkung zu erzielen. Insbesondere läßt sich eine gute Dispergierung erfindungsgemäß dadurch erreichen, daß die Deagglomeration der CNTs gemäß Verfahrensschritt (a) vor der in Verfahrensschritt (b) durchgeführten Eincompoundierung erfolgt, bevorzugt in einer Rührwerkskugelmühle, und nachfolgend in Verfahrensschritt (b) "nur" noch eine homogene und feine Verteilung bzw. Einarbeitung der CNT-Dispersion bzw. CNT-Lösung durchgeführt bzw. bewirkt werden muß.

Erfindungsgemäß werden in Verfahrensschritt (a) die Kohlenstoffnanoröhren (CNTs) in einer Konzentration von 0,001 bis 30 Gew.-%, insbesondere 0,01 bis 20 Gew.-%, vorzugsweise 0,01 bis 15 Gew.-%, besonders bevorzugt 0,01 bis 10 Gew.-%, jeweils bezogen auf die resultierende Dispersion oder Lösung, eingesetzt.

Im Rahmen der vorliegenden Erfindung hat es sich insbesondere als vorteilhaft erwiesen, wenn die Herstellung der Dispersion oder Lösung in Verfahrensschritt (a) durch schrittweise oder chargenweise Zugabe der Kohlenstoffnanoröhren (CNTs) in die kontinuierliche flüssige Phase erfolgt; dabei können die einzelnen Chargen jeweils gleiche oder aber unterschiedliche Mengen an Kohlenstoffnanoröhren (CNTs) umfassen. Diese Vorgehensweise hat insbesondere den Vorteil, daß eine verbesserte Einarbeitung der Kohlenstoffnanoröhren (CNTs) realisiert werden kann, insbesondere ein übermäßiger intermediärer Viskositätsanstieg der resultierenden Dispersion bzw. Lösung vermieden wird, was die Handhabbarkeit wesentlich erleichtert.

Im allgemeinen wird in Verfahrensschritt (a) der Dispergier- bzw. Solubilisierungsvorgang in Gegenwart mindestens eines Additivs, insbesondere mindestens eines Dispergier- oder Solubilisierungsadditivs, durchgeführt. Beispiele für derartige Additive sind Dispergiermittel (Dispergatoren), insbesondere Netzmittel oder Tenside, Entschäumer, Stabilisatoren, pH-Stellmittel, Rheologiemodifikatoren bzw. rheologische Additive, kompatibilitätsverbessernde Additive etc. sowie Mischungen der vorgenannten Art.

Gemäß einer besonderen Ausführungsform der vorliegenden Erfindung wird in Verfahrensschritt (a) in Gegenwart mindestens eines Dispergiermittels (Dispergators) durchgeführt. Dies führt zu Vorteilen in mehrfacher Hinsicht: Zum einen läßt sich auf diese Weise das Dispergier- bzw. Solubilisierungsverhalten der Kunststoffnanoröhren (CNTs) signifikant verbessern, insbesondere im Hinblick auf höhere Konzentrationen und kürzere Dispergier- bzw. Solubilisierungszeiten. Auch läßt sich die Homogenität sowohl der Dispersion bzw. Lösung als auch des nachfolgend hergestellten Verbund- bzw. Kompositmaterials auf diese Weise steuern; ohne sich auf eine diesbezügliche Theorie festlegen zu wollen, lassen sich die diesbezüglichen Effekte möglicherweise dadurch erklären, daß das Dispergiermittel (Dispergator) zumindest zum Teil auf der Oberfläche der Kohlenstoffnanoröhren (CNTs) verbleibt bzw. hieran haftet oder hiermit verbunden ist, so daß eine bessere Einarbeitbarkeit der hiermit modifizierten Kohlenstoffnanoröhren (CNTs) in das Polymer bzw. in den Kunststoff resultiert.

Gemäß einer besonders bevorzugten Ausführungsform der vorliegenden Erfindung werden als Dispergiermittel (Dispergatoren) erfindungsgemäß Netzmittel und Tenside eingesetzt, besonders bevorzugt aus der Gruppe von mit Polyethergruppen modifizierten Copolymeren von ungesättigten 1,2-Säureanhydriden und aus Additionsprodukten von Hydroxylverbindungen und/oder Verbindungen mit tertiären Aminogruppen an Polyisocyanaten.

Weiterhin, wenn auch erfindungsgemäß weniger bevorzugt, können die erfindungsgemäß eingesetzten Dispergiermittel (Dispergatoren) auch ausgewählt sein aus der Gruppe von Polymeren und Copolymeren mit funktionellen und/oder pigmentaffinen Gruppen, Alkylammoniumsalzen von Polymeren und Copolymeren, Polymeren und Copolymeren mit sauren Gruppen, Kamm- und Blockcopolymeren, wie Blockcopolymeren mit insbesondere basischen pigmentaffinen Gruppen, gegebenenfalls modifizierten Acrylatblockcopolymeren, gegebenenfalls modifizierten Polyurethanen, gegebenenfalls modifizierten und/oder gegebenenfalls versalzten Polyaminen, Phosphorsäureestern, Ethoxylaten, Polymeren und Copolymeren mit Fettsäureresten, gegebenenfalls modifizierten Polyacrylaten, wie umgeesterten Polyacrylaten, gegebenenfalls modifizierten Polyestern, wie säurefunktionellen Polyestern, Derivaten der Cellulose, wie Carboxymethylcellulose, wasserlöslichen Sulfaten oder Sulfonaten höherer Kohlenwasserstoffe, wie Natriumdodecylsulfonat, oder niederer organischer Polymere, wie sulfoniertem Polystyrol, wasserdispergierbaren Pyrrolidonen, wie Polyvinvlpyrrolidon, Polyphosphaten sowie deren Mischungen.

Insbesondere kommen erfindungsgemäß bevorzugt Dispergiermittel (Dispergatoren) mit zahlenmittleren Molekulargewichten von mindestens 1.000 g/mol, bevorzugt mindestens 2.000 g/mol, besonders bevorzugt mindestens 3.000 /mol, ganz besonders bevorzugt mindestens 4.000 g/mol, zum Einsatz; bei derartigen Molekulargewichten, insbesondere mit steigendem Molekulargewicht, wird eine Migrationsneigung im Endprodukt (d. h. dem Kompositmaterial) verringert bzw. sogar zumindest im wesentlichen vollständig unterdrückt.

Sofern ein Dispergiermittel (Dispergator) in Verfahrensschritt (a) zur Anwendung kommt, wird dieses Dispergiermittel (Dispergator) vorzugsweise in Mengen von 10 bis 300 Gew.-%, vorzugsweise 50 bis 250 Gew.-%, jeweils bezogen auf die zu dispergierenden bzw. zu solubilisierenden Kohlenstoffnanoröhren (CNTs), eingesetzt.

Der Begriff des Dispergiermittels - synonym auch als Dispergator, Dispergieradditiv, Netzmittel etc. bezeichnet -, wie er im Rahmen der vorliegenden Erfindung verwendet wird, bezeichnet im allgemeinen insbesondere Substanzen, welche das Dispergieren von Teilchen in einem Dispersionsmittel bzw. Dispersionsmedium erleichtern, insbesondere indem die Grenzflächenspannung zwischen den beiden Komponenten - zu dispergierende Teilchen einerseits und Dispergiermittel andererseits - erniedrigt wird, also eine Benetzung herbeigeführt wird. Infolgedessen sind eine Vielzahl von synonymen Bezeichnungen für Dispergiermittel (Dispergatoren) in Gebrauch, z. B. Dispergieradditiv, Absetzverhinderungsmittel, Netzmittel, Detergens, Suspendier- bzw. Dispergierhilfsmittel, Emulgator etc. Der Begriff des Dispergiermittels ist nicht zu verwechseln mit dem Begriff des Dispersionsmittels, weil letzteres die kontinuierliche Phase der Dispersion (d. h. das flüssige, kontinuierliche Dispersionsmedium) bezeichnet. Im Rahmen der vorliegenden Erfindung dient das Dispergiermittel zudem auch dem Zweck, die dispergierten Partikel (d. h. die Kohlenstoffnanoröhren) zu stabilisieren, d. h. stabil in Dispersion zu halten, und in effizienter Weise deren Reagglomeration zu vermeiden bzw. wenigstens zu minimieren; dies wiederum führt zu den gewünschten Viskositäten der resultierenden Dispersionen, da auf diese Weise in der Praxis gut handhabbare, fließfähige Systeme resultieren - und dies selbst bei hohen Konzentrationen der dispergierten Kohlenstoffnanoröhren.

Für weitergehende Einzelheiten zu den Begriffen "Dispergens", "Dispergieren", "Dispergiermittel", "Disperse Systeme" und "Dispersion" kann beispielsweise auf Römpp Chemielexikon, 10. Auflage, Georg Thieme Verlag, Stuttgart/New York, Band 2, 1997, Seiten 1014/1015, sowie die dort referierte Literatur, deren gesamter Offenbarungsgehalt bzw. Inhalt hiermit durch Bezugnahme eingeschlossen ist, verwiesen werden.

Gemäß einer besonderen Ausführungsform der vorliegenden Erfindung wird Verfahrensschritt (a) in Gegenwart mindestens eines Entschäumers durchgeführt. Dabei kann der Entschäumer entweder als alleiniges Additiv oder aber zusammen mit mindestens einem weiteren Additiv, insbesondere einem Dispergiermittel (insbesondere wie zuvor beschrieben), eingesetzt werden. Auch der Entschäumer trägt in mehrfacher Hinsicht zu einer signifikanten Verbesserung der Dispergier- bzw. Solubilisierungseigenschaften, aber auch im Hinblick auf die Eigenschaften der Einarbeitung des Polymers und der auf diese Weise resultierenden Verbund- bzw. Kompositmaterialien bei: Zum einen verhindert der Entschäumer in effizienter Weise ein Aufschäumen während des Herstellvorgangs der Dispersion bzw. Lösung im Rahmen von Verfahrensschritt (a). Zum anderen verhindert der Entschäumer aber auch ein unerwünschtes Schäumen der in Verfahrensschritt (a) hergestellten Dispersion bzw. Lösung der Kohlenstoffnanoröhren (CNTs) bei Eintrag in die Schmelze des Polymers bzw. Kunststoffs, da dieser Eintrag üblicherweise unter hohen Drücken erfolgt. Weiterhin bewirkt der Entschäumer aber auch, daß ein unerwünschtes Schäumen des Polymers, insbesondere beim Eintragen der Dispersion bzw. der Lösung der Kohlenstoffnanoröhren (CNTs), verhindert wird, was folglich auch zu verbesserten Eigenschaften im Endprodukt, dem resultierenden Komposit- bzw. Verbundmaterial, führt.

Erfindungsgemäß bevorzugt eingesetzte Entschäumer sind insbesondere ausgewählt aus der Gruppe von mineralölbasierten oder silikonbasierten Entschäumern sowie deren Mischungen bzw. Kombinationen.

Die Menge an in Verfahrensschritt (a) eingesetztem Entschäumer kann in weiten Bereichen variieren. Im allgemeinen werden Mengen von 0,1 bis 300 Gew.-%, insbesondere 0,5 bis 250 Gew.-%, bevorzugt 5 bis 200 Gew.-%, noch mehr bevorzugt 10 bis 150 Gew.-%, besonders bevorzugt 20 bis 100 Gew.-%, des Entschäumers, jeweils bezogen auf die Kohlenstoffnanoröhren (CNTs), in Verfahrensschritt (a) eingesetzt. Erfindungsgemäß wird der Entschäumer weiterhin im allgemeinen in Mengen von 0,01 bis 20 Gew.-%, insbesondere 0,02 bis 10 Gew.-%, bevorzugt 0,03 bis 5 Gew.-%, noch mehr bevorzugt 0,05 bis 2 Gew.-%, besonders bevorzugt 0,05 bis 1 Gew.-%, jeweils bezogen auf die resultierende Dispersion oder Lösung, eingesetzt.

Was die in Verfahrensschritt (a) eingesetzte, kontinuierliche, im allgemeinen flüssige Phase, insbesondere das in Verfahrensschritt (a) eingesetzte Lösungs- oder Dispersionsmittel, anbelangt, so kann es sich hierbei um ein wäßriges, organisches oder aber wäßrig-organisches Lösungs- oder Dispersionsmittel handeln. Im allgemeinen wird als kontinuierliche flüssige Phase in Verfahrensschritt (a) ein unter Dispergier- oder Solubilisierungsbedingungen, insbesondere unter Atmosphärendruck (101,325 kPa) und in einem Temperaturbereich von 10 bis 100 °C, vorzugsweise 25 bis 70 °C, im flüssigen Aggregatzustand vorliegendes Lösungs- oder Dispersionsmittel eingesetzt. Diesbezüglich kann auf den zuvor zusammen mit der Herstellung der Dispersion bzw. Lösung der Kohlenstoffnanoröhren (CNTs) geschilderten Stand der Technik verwiesen werden.

Was die kontinuierliche Phase, insbesondere das Lösungs- oder Dispersionsmittel, anbelangt, so wird diese im allgemeinen derart gewählt, daß sie bei Atmosphärendruck (101,325 kPa) einen Siedepunkt im Temperaturbereich von 20 bis 300 °C, vorzugsweise 50 bis 200 °C, besonders bevorzugt 60 bis 150°C, aufweist.

Erfindungsgemäß erfolgt das Eintragen der in Verfahrensschritt (a) hergestellten Dispersion oder Lösung von Kohlenstoffnanoröhren (CNTs) mittels einer Förder- und/oder Dosierpumpe. Dabei erfolgt üblicherweise der Eintrag unter Druckbeaufschlagung, insbesondere mit einem Förderdruck von 2 bis 100 bar, bevorzugt 5 bis 50 bar, vorzugsweise 10 bis 40 bar, da die Dispersion bzw. Lösung der Kohlenstoffnanoröhren (CNTs) in das aufgeschmolzene Polymer eingetragen wird, so daß dem Dampfdruck der kontinuierlichen flüssigen Phase entgegengewirkt werden muß. Erfindungsgemäß erfolgt der Eintrag mit konstanter Dosiergeschwindigkeit und/oder mit konstanter Dosiergenauigkeit, damit ein konstanter, gleichmäßiger Eintrag in das aufgeschmolzene Polymer gewährleistet ist und auf diese Weise ein Endprodukt mit durchgehend gleichmäßiger, homogener Qualität resultiert.

Erfindungsgemäß geeignete Förder- und/oder Dosierpumpen werden beispielsweise von der ViscoTec Pumpen und Dosiertechnik GmbH, Töging/Inn, Deutschland, vertrieben.

Das Eintragen bzw. die Dosierung der CNT-Dispersion bzw. CNT-Lösung in die polymere Schmelze erfolgt gegen den Druck der Schmelze unmittelbar bzw. direkt in die Schmelze für eine augenblickliche bzw. instantane Dispergierung im Polymer, ohne daß sich Agglomerate bilden können.

Üblicherweise wird die CNT-Suspension bzw. CNT-Lösung in flüssiger Phase eindosiert bzw. in die polymere Schmelze eingetragen bzw. eingebracht; dabei ist insbesondere der Dampfdruck zu beachten. Aufgrund dieser Verfahrensweise werden besonders gute Ergebnisse erhalten.

Was die Durchführung von Verfahrensschritt (b), insbesondere das Eintragen der in Verfahrensschritt (a) hergestellten Dispersion oder Lösung von Kohlenstoffnanoröhren (CNTs) in die Schmelze mindestens eines Polymers, anbelangt, so wird dieser Verfahrensschritt bzw. dieses Eintragen erfindungsgemäß in einer Extrusionsvorrichtung durchgeführt. Gemäß einer bevorzugten Ausführungsform ist die Extrusionsvorrichtung als Schneckenextruder ausgebildet.

Dabei wird das Polymer vorteilhafterweise mindestens 10 °C, vorzugsweise mindestens 20 °C, besonders bevorzugt 10 bis 50 °C, oberhalb seines Schmelzpunktes oder Schmelzbereichs erwärmt. Auf diese Weise wird in zuverlässiger Weise gewährleistet, daß alles Polymer im geschmolzenen Zustand vorliegt. Üblicherweise werden für die erfindungsgemäß eingesetzten Polymere Temperaturen von 150°C bis 300 °C, insbesondere 180 °C bis 280 °C, angewendet, d. h. üblicherweise werden in Verfahrensschritt (b) die Polymere auf Temperaturen von 150°C bis 300 °C, insbesondere 180°C bis 280 °C, erwärmt. Übermäßig hohe Temperaturen dagegen können zu einer teilweisen Zersetzung bzw. zu einem partiellen Abbau der Polymere und gegebenenfalls vorhandener Additive führen, während bei zu geringen Temperaturen die Gefahr besteht, daß keine homogene Schmelze vorliegt bzw. das Polymer zumindest teilweise nicht aufgeschmolzen wird.

Gemäß der vorliegenden Erfindung weist die Extrusionsvorrichtung Mischeinrichtungen zur Homogenisierung, insbesondere Durchmischung, der in Verfahrensschritt (a) bereitgestellten Dispersion oder Lösung von Kohlenstoffnanoröhren (CNTs) mit der Schmelze mindestens eines Polymers und eine Entgasungseinrichtung, vorzugsweise zur Entgasung unter reduziertem Druck, zu Zwecken der Entfernung der kontinuierlich flüssigen Phase auf.

Gemäß einer besonderen Ausführungsform kann die Extrusionsvorrichtung in mehrere Abschnitte bzw. Zonen unterteilt sein. Dabei kann die Extrusionsvorrichtung einen ersten Abschnitt bzw. eine erste Zone zum Eintragen des mindestens einen Polymers, gefolgt von einem Aufschmelzabschnitt (Aufschmelzzone) zum Aufschmelzen des Polymers, wiederum gefolgt von einem Einführabschnitt (Einführzone) zum Einführen der Dispersion oder Lösung der Kohlenstoffnanoröhren (CNTs), wiederum gefolgt von einem Homogenisierungs- und Entgasungsabschnitt (Homogenisierungs- und Entgasungszone), umfassen, welchem sich wiederum ein Austragsabschnitt (Austragszone) anschließt.

Besonders gute Ergebnisse, insbesondere erfindungsgemäße Kompositmaterialien mit guter bis ausgezeichneter elektrischer Leitfähigkeit und gleichzeitig guten bis ausgezeichneten mechanischen Eigenschaften, werden dann erhalten, wenn in Verfahrensschritt (b) das Eintragen der zuvor in Verfahrensschritt (a) hergestellten Dispersion bzw. Lösung der CNTs mit hoher Drehzahl des Extruders, insbesondere der Förderschnecke des Extruders, und/oder geringem Durchsatz und/oder unter hohem Energieeinsatz erfolgt. Insbesondere kommen hierbei besonders feinteilige CNT-Dispersionen bzw. CNT-Lösungen, wie zuvor definiert, zum Einsatz. Bevorzugt erfolgt der Eintrag der CNT-Dispersion oder CNT-Lösung in Verfahrensschritt (b) mit einem volumenbezogenen Durchsatz von 1 bis 1.000 ml/min, insbesondere 2 bis 500 ml/min, vorzugsweise 5 bis 200 ml/min, bevorzugt 10 bis 100 ml/min. Erfindungsgemäß bevorzugt sind Drehzahlen des Extruders, insbesondere der Förderschnecke des Extruders, im Bereich von 100 bis 1.000 U/min, insbesondere 200 bis 900 U/min, bevorzugt 300 bis 800 U/min. Weiterhin sind erfindungsgemäß massenbezogene Durchsätze des Polymers im Bereich von 0,1 bis 100 kg/h, insbesondere 1 bis 50 kg/h, vorzugsweise 2 bis 25 kg/h, bevorzugt 3 bis 15 kg/h, vorteilhaft.

Im Rahmen des Verfahrensschrittes (b) erfolgt gleichzeitig das Entfernen der kontinuierlichen Phase der CNT-Dispersion bzw. CNT-Lösung (z. B. Wasser und/oder organisches Lösungsmittel etc.). Dabei werden bevorzugt Restgehalte an kontinuierlicher Phase, insbesondere Restwassergehalte, von höchstens 1 Gew.-%, bevorzugt höchstens 0,5 Gew.-%, besonders bevorzugt höchstens 0,3 Gew.-%, ganz besonders bevorzugt höchstens 0,2 Gew.-%, bezogen auf das Endprodukt (d. h. bezogen auf das erfindungsgemäße Kompositmaterial), erhalten bzw. eingestellt. Besonders gute Ergebnisse werden erhalten, wenn das Entfernen der kontinuierlichen Phase der CNT-Dispersion bzw. CNT-Lösung mehrstufig, insbesondere mindestens zweistufig, durchgeführt wird, bevorzugt in einer Extrusionsvorrichtung, wobei die Extrusionsvorrichtung die entsprechenden Abführ- oder Entgasungseinrichtungen zum Abführen oder Ablassen der kontinuierlichen Phase im allgemeinen in gasförmiger Form aufgrund der angewandten Temperaturen aufweisen kann, wie nachfolgend noch geschildert.

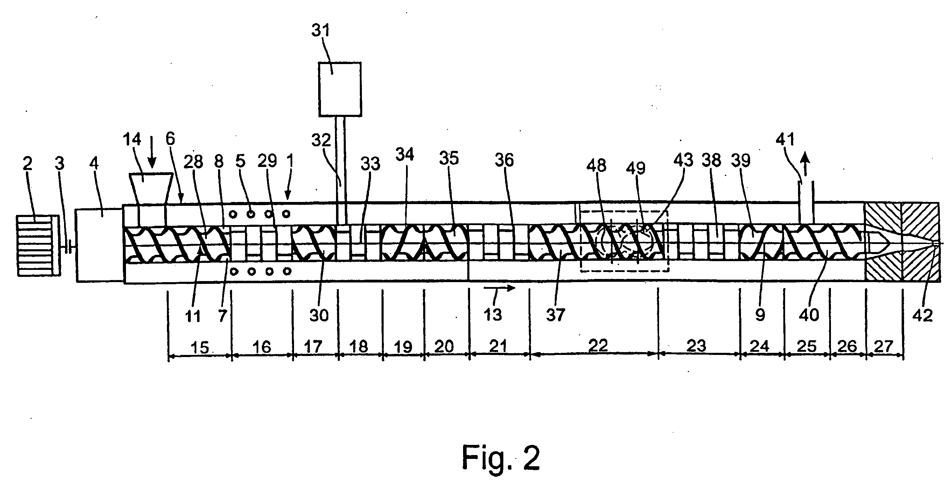

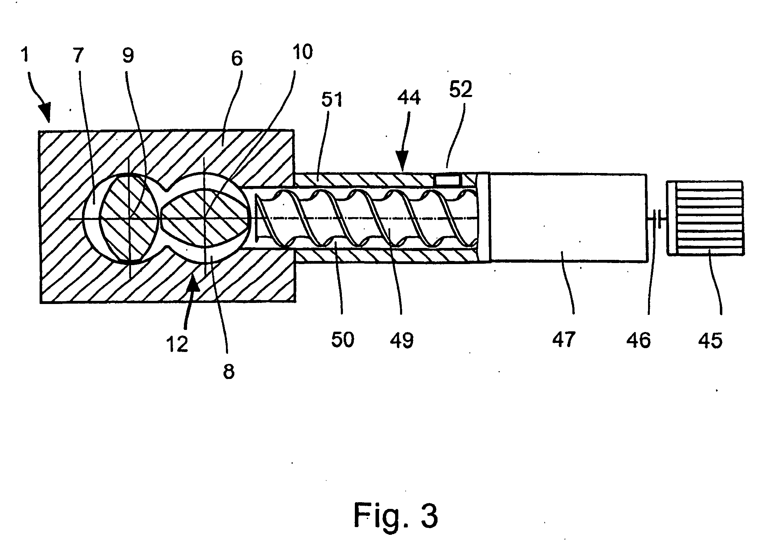

Eine erfindungsgemäß bevorzugt eingesetzte Extrusionsvorrichtung gemäß einem Ausführungsbeispiel ist in den Figurendarstellungen gemäß Fig. 2 und 3 wiedergegeben.

Es zeigt:
- Fig. 2: eine Seitenansicht eines im Rahmen der Erfindung einsetzbaren Extruders in teilweise aufgebrochener Darstellung;
- Fig. 3: einen vertikalen Querschnitt durch den Extruder mit einer Anordnung der Rückhalte-Entgasung-Schneckenmaschine gemäß Fig. 2.

Das in der Zeichnung gemäß Fig. 2 und 3 dargestellte Ausführungsbeispiel weist einen Extruder 1 auf. Er wird mittels eines Motors 2 über eine Kupplung 3 und ein Getriebe 4 angetrieben. Der Extruder 1 weist ein mit einer Heizung 5 versehenes Gehäuse 6 auf, in dem zwei etwa 8-förmig ineinander greifende Gehäuse-Bohrungen 7, 8 mit zueinander parallelen Achsen 9, 10 ausgebildet sind. In diesen Gehäuse-Bohrungen 7, 8 sind zwei Schnecken-Wellen 11, 12 angeordnet, die an das Getriebe 4 angekoppelt sind. Die Schnecken-Wellen 11, 12 werden gleichsinnig angetrieben. Der Extruder 1 weist einen in einer Förderrichtung 13 hinter dem Getriebe 4 angeordneten Zuführ-Trichter 14 auf, durch den aufzubereitender Kunststoff (Polymer) zugeführt wird oder aufzubereitende Kunststoffe (Polymere) zugeführt werden und an den sich eine Einzugs-Zone 15 anschließt. Im Anschluß daran ist eine Aufschmelz-Zone 16 ausgebildet. Der Aufschmelz-Zone 16 folgt Förder-Zone 17. Im Anschluß daran ist die Füllstoff-Einmisch-Zone 18 ausgebildet. Dieser ist die Rückstau-Zone 19 nachgeordnet. Dieser folgt die Förderzone 20 und die Homogenisierungs-Zone 21. Im Anschluß daran ist eine Vakuum-Entgasungs-Zone 22 ausgebildet, an die sich eine Misch-Zone 23 anschließt. Dieser Einmisch-Zone 23 folgt eine Rückstau-Zone 24, hinter der sich eine Vakuum-Entgasungs-Zone 25 befindet. Daran schließt sich eine Druckaufbau-Zone 26 und daran eine Austrags-Zone 27 an.

In der Einzugs-Zone 15 weisen die Schnecken-Wellen 11, 12 Schnecken-Elemente 28 auf. In der Aufschmelz-Zone 16 sind sie mit Knet-Elementen 29 versehen. In der Förder-Zone 17 sind wiederum Schnecken-Elemente 30 angeordnet. In der Füllstoff-Einmisch-Zone 18 sind Mischelemente 33 vorgesehen, wie sie aus DE 41 34 026 C2 (entsprechend US 5 318 358 A) vorbekannt sind. Außerdem wird über eine Suspensions-Dosiereinrichtung 31 eine Dispersion bzw. Lösung von Kohlenstoffnanoröhren und gegebenenfalls Additiven in einer kontinuierlichen flüssigen Phase über die Förderleitung 32 in die Gehäuse-Bohrung geführt.

In der Rückstau-Zone 19 sind Stau-Elemente 34 in Form von Rückförder-Schnecken-Elementen oder dergleichen vorgesehen. In der Förderzone 20 sind Schnecken-Elemente 35 und in der Homogenisierungs-Zone 21 Mischelemente 36 angeordnet.

In der Vakuum-Entgasungs-Zone 22 sind Schnecken-Elemente 37 und in der Einmisch-Zone 23 sind Knetelemente 38 vorgesehen.

In der Rückstau-Zone 24 sind wiederum Stau-Elemente 39 vorgehen. In der Vakuum-Entgasungs-Zone 25, der nachfolgenden Druckaufbau-Zone 26 und der Austrags-Zone 27 sind wiederum Schnecken-Elemente 40 vorgesehen. An die Druckaufbau-Zone 26 und die Austrags-Zone 27 schließt sich eine Düse 42 an.

In der Vakuum-Entgasungs-Zone 25 wird der aufgeschmolzene Kunststoff (Polymer) über eine Anschlußleitung 41 vakuumentgast.

In der Vakuum-Entgasungs-Zone 22 mündet eine Rückhalte-Entgasungs-Schneckenmaschine 43 radial zur Achse 9 in eine Gehäuse-Bohrung 7 ein. Sie weist einen Antriebs-Motor 45 auf, der über eine Kupplung 46 mit einem Getriebe 47 gekoppelt ist, von dem zwei dicht miteinander kämmende FörderSchnecken 48, 49 gleichsinnig angetrieben werden. Die Förderschnecken 48, 49 sind in ebenfalls 8-förmig einander durchdringenden Gehäuse-Bohrungen 50 angeordnet, die durch eine Rückhalte-Entgasungs-Öffnung 43 im Gehäuse 6 in die Gehäuse-Bohrung 7 einmündet und bis in die Nähe der Schnecken-Elemente 37 reicht.

In der Rückhalte-Entgasungs-Schneckenmaschine 43 wird der aufgeschmolzenen Kunststoff über die gleichsinnig angetriebenen Schnecken zurückgehalten und über eine Entgasungs-Öffnung 52 in dem Gehäuse 51 gegen Atmosphärendruck entgast.

Mittels der Stau-Elemente 34 wird erreicht, daß der in der Aufschmelz-Zone 16 aufgeschmolzener Kunststoff (Polymer) den Schneckenquerschnitt zumindest in der Füllstoff-Einmisch-Zone 18 vollständig füllt. Dabei wird die Drehzahl des Extruders so gewählt, daß der Druck in der Einmisch-Zone 18 über dem Dampfdruck liegt, beispielsweise über 20 bar bei Polyethylen (PE) oder Polypropylen (PP) bei einer Temperatur von 200 °C.

Die Dosiereinrichtung 31 für die Dispersion bzw. Lösung ist so auszulegen, daß sie bei der Dosierung der Suspension den in der Einmisch-Zone 18 herrschenden Druck überwinden kann.

In der Praxis hat es sich bewährt, den Durchmesser der Förderleitung 32 größer als 4 mm zu wählen, um Verstopfungen der Förderleitungen vorzubeugen.

Der aufgeschmolzene und mit Dispersion (d. h. Lösungs- bzw. Dispersionsmittel, Kohlenstoffnanoröhren und gegebenenfalls Additiven) vermischte Kunststoff (Polymer) gelangt nach der Rückstau-Zone 19 in die Förderzone 20. Ab hier reduziert sich der Druck in dem Extruder, und die Anteile an Lösungs- bzw. Dispersionsmittel (z. B. Wasseranteile der Dispersion bzw. Lösung) verdampfen und werden über die Rückhalte-Entgasungs-Öffnung 43 der Rückhalte-Entgasungs-Schneckenmaschine 43 abgeführt. Die Drehzahl der Rückhalte-Entgasungs-Schneckenmaschine 43 ist so gewählt, daß der aufgeschmolzene Kunststoff (Polymer) betriebssicher zurückgehalten wird.

Um ein übermäßig starkes Abkühlen der Kunststoffschmelze durch die Kondensationsenthalpie zu verhindern, wird in der Einmisch-Zone 23 mittels der Knetelemente 38 mechanische Energie in die Kunststoffschmelze eingeleitet.

Anschließend werden noch verbliebene Reste an Feuchtigkeit und gegebenenfalls Lösemittel in der Vakuum-Entgasungs-Zone 25 über die Anschlußleitung 41 abgezogen.

Erfindungsgemäß geeignete Extrusionsvorrichtungen werden beispielsweise von der Coperion GmbH (vormals: Coperion Werner & Pfleiderer GmbH & Co. KG), Stuttgart, Deutschland, vertrieben.

Im allgemeinen kann das erfindungsgemäße Verfahren kontinuierlich oder semikontinuierlich durchgeführt werden. Insbesondere können dabei Verfahrensschritt (a) diskontinuierlich und die nachfolgenden Verfahrensschritte (b) und (c) kontinuierlich durchgeführt werden.

Im Rahmen der vorliegenden Erfindung lassen sich die Kohlenstoffnanoröhren (CNTs) mit hohen Konzentrationen bzw. hohen Füllgraden in das Polymer bzw. den Kunststoff einarbeiten. Im allgemeinen können die Kohlenstoffnanoröhren (CNTs) in Mengen von 0,001 bis 20 Gew.-%, insbesondere 0,1 bis 15 Gew.-%, vorzugsweise 0,5 bis 12 Gew.-%, besonders bevorzugt 1 bis 10 Gew.-%, bezogen auf das Kompositmaterial aus Polymer bzw. Kohlenstoffnanoröhren (CNTs), eingearbeitet werden.

Was die im Rahmen des erfindungsgemäßen Verfahrens eingesetzten Kohlenstoffnanoröhren (CNTs) anbelangt, so kann hierzu folgendes ausgeführt werden.

Im Rahmen des erfindungsgemäßen Verfahrens lassen sich nahezu beliebige Kohlenstoffnanoröhren (CNTs) einsetzen, wie sie nach aus dem Stand der Technik bekannten Verfahren hergestellt werden können oder aber als handelsübliche Produkte erhältlich sind (z. B. von der Bayer MaterialScience AG, Leverkusen).

Die erfindungsgemäß eingesetzten Kohlenstoffnanoröhren (CNTs) können beispielsweise einwandige Kohlenstoffnanoröhren (Single-Wall Carbon Na-notubes = SWCNT bzw. SWNT) oder mehrwandige Kohlenstoffnanoröhren (Multi-Wall Carbon Nanotubes = MWCNT bzw. MWNT), insbesondere 2-bis 30wandige, vorzugsweise 3- bis 15wandige Kohlenstoffnanoröhren, sein. Die erfindungsgemäß eingesetzten Kohlenstoffnanoröhren (CNTs) können mittlere Innendurchmesser von 0,4 bis 50 nm, insbesondere 1 bis 10 nm, vorzugsweise 2 bis 6 nm, und/oder mittlere Außendurchmesser von 1 bis 60 nm, insbesondere 5 bis 30 nm, vorzugsweise 10 bis 20 nm, aufweisen. Die erfindungsgemäß eingesetzten Kohlenstoffnanoröhren (CNTs) können mittlere Längen von 0,01 bis 1.000 µm, insbesondere 0,1 bis 500 µm, vorzugsweise 0,5 bis 200 µm, besonders bevorzugt 1 bis 100 µm, aufweisen.

Ferner können die erfindungsgemäß eingesetzten Kohlenstoffnanoröhren (CNTs) eine Zugfestigkeit pro Kohlenstoffnanoröhre von mindestens 1 GPa, insbesondere mindestens 5 GPa, bevorzugt mindestens 10 GPa, und/oder einen Elastizitätsmodul pro Kohlenstoffnanoröhre von mindestens 0,1 TPa, insbesondere mindestens 0,5 TPa, bevorzugt mindestens 1 TPa, und/oder eine thermische Leitfähigkeit von mindestens 500 W/mK, insbesondere mindestens 1.000 W/mK, bevorzugt mindestens 2.000 W/mK, und/oder eine elektrische Leitfähigkeit von mindestens 10³ S/cm, insbesondere mindestens 0,5 · 10⁴ S/cm, bevorzugt mindestens 10⁴ S/cm, aufweisen.

Üblicherweise eingesetzte Kohlenstoffnanoröhren (CNTs) weisen eine Schüttdichte im Bereich von 0,01 bis 0,3 g/cm³, insbesondere 0,02 bis 0,2 g/cm³, vorzugsweise 0,1 bis 0,2 g/cm³, auf und liegen als Agglomerate bzw. Konglomerate einer Vielzahl von Kohlenstoffnanoröhren (CNTs), insbesondere in stark verknäulter Form, vor.

Erfindungsgemäß geeignete Kohlenstoffnanoröhren (CNTs) sind handelsverfügbar, beispielsweise über die Bayer MaterialScience AG, Leverkusen, beispielsweise die Produktserie Baytubes^{®} (z. B. Baytubes^{®} C 150 P).

Grundsätzlich können die eingesetzten Kohlenstoffnanoröhren beispielsweise vom Zylinder-Typ, Scroll-Typ oder vom Typ mit zwiebelartiger Struktur, jeweils einwandig oder mehrwandig, bevorzugt mehrwandig, ausgebildet sein.

Gemäß einer bevorzugten Ausführungsform können die eingesetzten Kohlenstoffnanoröhren (CNTs) ein Verhältnis von Länge zu Außendurchmesser von ≥ 5, bevorzugt ≥ 100, aufweisen.

Gemäß einer besonderen Ausführungsform können die Kohlenstoffnanoröhren (CNTs) in Form von Agglomeraten eingesetzt werden; dabei können die Agglomerate insbesondere einen mittleren Durchmesser im Bereich von 0,05 bis 5 mm, bevorzugt 0,1 bis 2 mm, besonders bevorzugt 0,2 bis 1 mm, aufweisen.

Gemäß einer wiederum besonderen Ausführungsform können die eingesetzten Kohlenstoffnanoröhren (CNTs) einen mittleren Durchmesser von 3 bis 100 nm, bevorzugt 5 bis 80 nm, besonders bevorzugt 6 bis 60 nm, aufweisen.

Beispielsweise können die Kohlenstoffnanoröhren (CNTs) vom Scroll-Typ mit mehreren Graphenlagen, welche zu einem Stapel zusammengefaßt oder aufgerollt vorliegen, ausgewählt sein. Derartige Produkte sind beispielsweise über die Bayer MaterialScience AG, Leverkusen, verfügbar, so beispielsweise die Produktserie Baytubes^{®} (z. B. Baytubes^{®} C 150 P).

Wie zuvor beschrieben, können als Kohlenstoffnanoröhren im Sinne der Erfindung insbesondere alle einwandigen oder mehrwandigen Kohlenstoffnanoröhren z. B. vom Zylindertyp, Scroll-Typ oder mit zwiebelartiger Struktur eingesetzt werden. Bevorzugt sind mehrwandige Kohlenstoffnanoröhren vom Zylinder-Typ, Scroll-Typ oder deren Mischungen.

Wie zuvor geschildert, werden besonders bevorzugt werden Kohlenstoffnanoröhren mit einem Verhältnis von Länge zu Außendurchmesser von größer als 5, bevorzugt größer als 100, verwendet.

Wie zuvor geschildert, werden die Kohlenstoffnanoröhren besonders bevorzugt in Form von Agglomeraten eingesetzt, wobei die Agglomerate insbesondere einen mittleren Durchmesser im Bereich von 0,05 bis 5 mm, bevorzugt 0,1 bis 2 mm, besonders bevorzugt 0,2 bis 1 mm, aufweisen.

Erfindungsgemäß einsetzbare Kohlenstoffnanoröhren weisen besonders bevorzugt im wesentlichen einen mittleren Durchmesser von 3 bis 100 nm, bevorzugt 5 bis 80 nm, besonders bevorzugt 6 bis 60 nm, auf.

Im Unterschied zu den eingangs erwähnten, bekannten CNTs vom Scroll-Typ mit nur einer durchgehenden oder unterbrochenen Graphenlage werden erfindungsgemäß auch solche CNT-Strukturen eingesetzt, die aus mehreren Graphenlagen bestehen, die zu einem Stapel zusammengefaßt und aufgerollt vorliegen ("Multiscroll-Typ"). Diese Kohlenstoffnanoröhren und Kohlenstoffnanoröhrenagglomerate hieraus sind beispielsweise Gegenstand der DE 10 2007 044 031 oder der US 2009/0124705 A1. Diese CNT-Struktur verhält sich zu den Kohlenstoffnanoröhren vom einfachen Scroll Typ vergleichsweise wie die Struktur mehrwandiger zylindrischer Kohlenstoffnanoröhren ("cylindrical MWNTs") zur Struktur der einwandigen zylindrischen Kohlenstoffnanoröhren ("cylindrical SWNTs").

Anders als bei den zwiebelartigen Strukturen ("onion type structure") verlaufen die einzelnen Graphen- bzw. Graphitschichten in diesen Kohlenstoffnanoröhren, im Querschnitt gesehen, offenbar durchgehend vom Zentrum der CNTs bis zum äußeren Rand ohne Unterbrechung. Dies kann z. B. eine verbesserte und schnellere Interkalierung anderer Materialien im Röhrengerüst ermöglichen, da mehr offene Ränder als Eintrittszone der Interkalate zur Verfügung stehen im Vergleich zu CNTs mit einfacher Scrollstruktur (Carbon 34, 1996, 1301-3) oder CNTs mit zwiebelartiger Struktur (Science 263, 1994, 1744-7).

Die heute bekannten Methoden zur Herstellung von Kohlenstoffnanoröhren umfassen insbesondere Lichtbogen-, Laserablation- und katalytische Verfahren. Bei vielen dieser Verfahren werden Ruß, amorpher Kohlenstoff und Fasern mit hohem Durchmesser als Nebenprodukte gebildet. Bei den katalytischen Verfahren kann zwischen der Abscheidung an geträgerten Katalysatorpartikeln und der Abscheidung an in situ gebildeten Metallzentren mit Durchmessern im Nanometerbereich (sogenannte "Flow-Verfahren") unterschieden werden. Bei der Herstellung über die katalytische Abscheidung von Kohlenstoff aus bei Reaktionsbedingungen gasförmigen Kohlenwasserstoffen (im folgenden auch "CCVD" oder "catalytic carbon vapour deposition" genannt) werden als mögliche Kohlenstoffspender Acetylen, Methan, Ethan, Ethylen, Butan, Buten, Butadien, Benzol oder andere kohlenstoffhaltige Edukte eingesetzt. Bevorzugt werden daher erfindungsgemäß aus katalytischen Verfahren erhältliche CNTs eingesetzt.

Die Katalysatoren beinhalten in der Regel Metalle, Metalloxide oder zersetzbare bzw. reduzierbare Metallkomponenten. Beispielsweise sind im Stand der Technik als Metalle für den Katalysator Fe, Mo, Ni, V, Mn, Sn, Co, Cu und weitere Nebengruppenelemente genannt. Die einzelnen Metalle haben meist zwar eine Tendenz, die Bildung von Kohlenstoffnanoröhren zu unterstützen, allerdings werden laut Stand der Technik hohe Ausbeuten und geringe Anteile amorpher Kohlenstoffe vorteilhafterweise mit solchen Metallkatalysatoren erreicht, die auf einer Kombination der oben genannten Metalle basieren. Unter Verwendung von Mischkatalysatoren erhältliche CNTs werden folglich erfindungemäß bevorzugt eingesetzt.

Besonders vorteilhafte Katalysatorsysteme zur Herstellung von CNTs basieren auf Kombinationen von Metallen oder Metallverbindungen, die zwei oder mehr Elemente aus der Reihe Fe, Co, Mn, Mo und Ni enthalten.

Die Bildung von Kohlenstoffnanoröhren und die Eigenschaften der gebildeten Kohlenstoffnanoröhren hängen im allgemeinen in komplexer Weise von der als Katalysator verwendeten Metallkomponente oder einer Kombination mehrerer Metallkomponenten, dem gegebenenfalls verwendeten Katalysatorträgermaterial und der Wechselwirkung zwischen Katalysator und Träger, dem Eduktgas und -partialdruck, einer Beimischung von Wasserstoff oder weiteren Gasen, der Reaktionstemperatur und der Verweilzeit bzw. dem verwendeten Reaktor ab.

Ein besonders bevorzugt einzusetzendes Verfahren zur Herstellung von Kohlenstoffnanoröhren ist aus der WO 2006/050903 A2 bekannt.

In den bis hier genannten unterschiedlichen Verfahren unter Einsatz verschiedener Katalysatorsysteme werden Kohlenstoffnanoröhren verschiedener Strukturen hergestellt, die aus dem Prozeß überwiegend als Kohlenstoffnanoröhrenpulver entnommen werden können.

Für die Erfindung weiter bevorzugt geeignete Kohlenstoffnanoröhren werden nach Verfahren erhalten, die grundsätzlich in den nachstehenden Literaturstellen beschrieben sind:

Die Herstellung von Kohlenstoffnanoröhren mit Durchmessern kleiner 100 nm ist erstmals in der EP 0 205 556 B1 beschrieben. Für die Herstellung werden leichte (d. h. kurz- und mittelkettige aliphatische oder ein- oder zweikernige aromatische) Kohlenwasserstoffe und ein auf Eisen basierender Katalysator eingesetzt, an dem Kohlenstoffträgerverbindungen bei einer Temperatur oberhalb von 800 bis 900 °C zersetzt werden.

Die WO 86/03455A1 beschreibt die Herstellung von Kohlenstoff-Filamenten, die eine zylindrische Struktur mit einem konstanten Durchmesser von 3,5 bis 70 nm, ein Aspektverhältnis (d. h. Verhältnis von Länge zu Durchmesser) von größer als 100 und eine Kernregion aufweisen. Diese Fibrillen bestehen aus vielen durchgängigen Lagen geordneter Kohlenstoffatome, die konzentrisch um die zylindrische Achse der Fibrillen angeordnet sind. Diese zylinderartigen Nanotubes wurden nach einem CVD-Prozeß aus kohlenstoffhaltigen Verbindungen mittels eines metallhaltigen Partikels bei einer Temperatur zwischen 850 °C und 1200 °C hergestellt.

Aus der WO2007/093337A2 ist noch ein Verfahren zur Herstellung eines Katalysators bekannt geworden, der für die Herstellung von konventionellen Kohlenstoffnanoröhren mit zylindrischer Struktur geeignet ist. Bei Verwendung dieses Katalysators in einem Festbett werden höhere Ausbeuten von zylindrischen Kohlenstoffnanoröhren mit einem Durchmesser im Bereich von 5 bis 30 nm erhalten.

Ein völlig anderer Weg zur Herstellung zylindrischer Kohlenstoffnanoröhren wurde von Oberlin, Endo und Koyam beschrieben (Carbon 14, 1976, 133). Dabei werden aromatische Kohlenwasserstoffe, wie z. B. Benzen bzw. Benzol, an einem Metallkatalysator umgesetzt. Die entstandenen Kohlenstoffröhren zeigen einen gut definierten, graphitischen hohlen Kern, der ungefähr den Durchmesser des Katalysatorpartikels hat und auf dem sich weiterer weniger graphitisch geordneter Kohlenstoff befindet. Die gesamte Röhre kann durch Behandlung bei hoher Temperatur (ca. 2.500 °C bis 3.000°C) graphitisiert werden.

Die meisten der zuvor genannten Verfahren (mit Lichtbogen, Sprühpyrolyse bzw. CVD etc.) werden heutzutage zur Herstellung von Kohlenstoffnanoröhren genutzt. Die Herstellung einwandiger zylindrischer Kohlenstoffnanoröhren ist jedoch apparativ sehr aufwendig und verläuft nach den bekannten Verfahren mit sehr geringer Bildungsgeschwindigkeit und oft auch mit vielen Nebenreaktionen, die zu einem hohen Anteil an unerwünschten Verunreinigungen führen, d. h. die Ausbeute solcher Verfahren ist vergleichsweise gering. Deshalb ist die Herstellung derartiger Kohlenstoffnanoröhren auch heute noch technisch extrem aufwendig, und sie kommen daher vor allem für hoch spezialisierte Anwendungen in geringen Mengen zum Einsatz. Ihre Anwendung ist jedoch für die Erfindung denkbar, aber weniger bevorzugt als die Anwendung von mehrwandigen CNTs vom Zylinder- oder Scrolltyp.

Die Herstellung von mehrwandigen Kohlenstoffnanoröhren in Form von ineinander geschachtelten nahtlosen zylindrischen Nanotubes oder auch in Form der beschriebenen Scroll- oder Zwiebel-Strukturen erfolgt heute kommerziell in größeren Mengen überwiegend unter Verwendung katalytischer Verfahren. Diese Verfahren zeigen üblicherweise eine höhere Ausbeute als die oben genannten Lichtbogen- und andere Verfahren und werden heute typischerweise im Kilogramm-Maßstab (einige hundert Kilogramm pro Tag weltweit) durchgeführt. Die so hergestellten MW-Carbon Nanotubes sind in der Regel um einiges kostengünstiger als die einwandigen Nanotubes und werden deshalb z. B. als leistungsssteigerndes Additiv in anderen Werkstoffen eingesetzt.

Weiterer Gegenstand der vorliegenden Erfindung - gemäß einem **zweiten Aspekt** der vorliegenden Erfindung - sind Kompositmaterialien (Verbundmaterialien), welche mindestens ein Polymer einerseits und Kohlenstoffnanoröhren (CNTs) andererseits enthalten, insbesondere wie sie erhältlich sind nach dem zuvor beschriebenen erfindungsgemäßen Verfahren.

Insbesondere sind Gegenstand der vorliegenden Erfindung Kompositmaterialien (Verbundmaterialien), welche mindestens ein Polymer einerseits und Kohlenstoffnanoröhren (CNTs) andererseits umfassen, wie sie insbesondere durch das zuvor beschriebene Verfahren nach der vorliegenden Erfindung erhältlich sind, wobei die erfindungsgemäßen Kompositmaterialien im allgemeinen einen Gehalt an Kohlenstoffnanoröhren (CNTs) von 0,001 bis 20 Gew.-%, insbesondere 0,1 bis 15 Gew.-%, vorzugsweise 0,5 bis 12 Gew.-%, besonders bevorzugt 1 bis 10 Gew.-%, bezogen auf das Kompositmaterial, aufweisen.

Die erfindungsgemäßen Kompositmaterialien können weiterhin, insbesondere herstellungsbedingt, mindestens ein Dispergiermittel (Dispergator), insbesondere wie zuvor definiert, umfassen, vorzugsweise in Mengen von 0,01 bis 300 Gew.-%, insbesondere in Mengen von 0,05 bis 250 Gew.-%, vorzugsweise 0,1 bis 200 Gew.-%, besonders bevorzugt 0,5 bis 150 Gew.%, ganz besonders bevorzugt 1 bis 100 Gew.-%, jeweils bezogen auf die Kohlenstoffnanoröhren (CNTs). Das Dispergiermittel ermöglicht im Laufe des Herstellungsverfahrens eine gute und besonders homogene Einarbeitung der Kohlenstoffnanoröhren (CNTs).

Des weiteren können die erfindungsgemäßen Kompositmaterialien, insbesondere gleichermaßen herstellungsbedingt, mindestens einen Entschäumer, insbesondere wie zuvor definiert, umfassen, vorzugsweise in Mengen von 0,01 bis 200 Gew.-%, insbesondere 0,05 bis 175 Gew.-%, vorzugsweise 0,1 bis 150 Gew.-%, besonders bevorzugt 0,2 bis 100 Gew.%, jeweils bezogen auf die Kohlenstoffnanoröhren (CNTs). Auch der Entschäumer gewährleistet - wie das Dispergiermittel - im Laufe des Herstellungsverfahrens eine gute wie homogene Einarbeitung der Kohlenstoffnanoröhren (CNTs).

Des weiteren weisen die erfindungsgemäßen Kompositmaterialien ausgezeichnete elektrische bzw. Leitfähigkeitseigenschaften auf.

Insbesondere besitzen die erfindungsgemäßen Kompositmaterialien ausgezeichnete elektrische Widerstandswerte. Den elektrischen Widerstand eines Isolierstoffes zwischen zwei beliebigen Elektroden an oder in einem Prüfkörper beliebiger Form bezeichnet man als Isolationswiderstand, wobei man drei verschiedene Arten von Widerständen unterscheidet, nämlich Durchgangs- bzw. spezifischer Durchgangswiderstand (Volumenwiderstand), Oberflächenwiderstand bzw. spezifischer Oberflächenwiderstand und Widerstand zwischen Stöpseln. Unter Durchgangswiderstand versteht man den zwischen zwei flächigen Elektroden gemessenen Widerstand im Werkstoffinneren, insbesondere bestimmt nach DIN IEC 60 093 VDE 0303/30; wenn man den Durchgangswiderstand auf einen Würfel von 1 cm Kantenlänge umrechnet, erhält man den spezifischen Durchgangswiderstand. Der Oberflächenwiderstand dagegen gibt Aufschluß über den an der Oberfläche eines Isolierstoffes herrschenden Isolationszustandes, insbesondere gleichermaßen bestimmt nach DIN IEC 60 093 VDE 0303/30. Für weitergehende diesbezügliche Einzelheiten kann beispielsweise verwiesen werden auf Schwarz/Ebeling (Hrsg.), Kunststoffkunde, 9. Auflage, Vogel Buchverlag, Würzburg, 2007, insbesondere Kapitel 6.4 "Elektrische Eigenschaften".

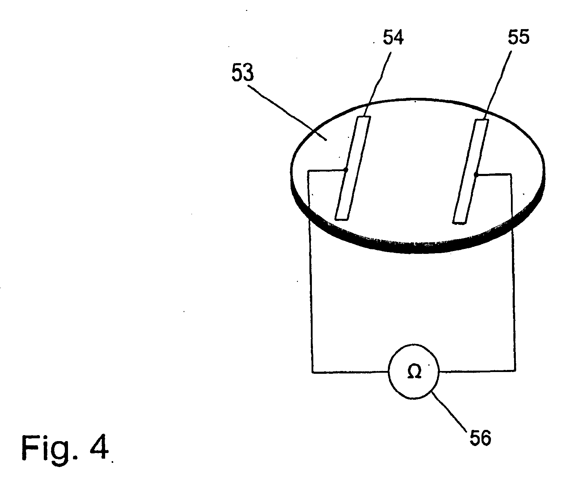

Alternativ kann der Oberflächenwiderstand auch nach einer Methode bestimmt werden, wie sie in Fig. 4 schematisch dargestellt ist und auch in den Ausführungsbeispielen dargestellt ist: Die Messung des elektrischen Oberflächenwiderstandes erfolgt nach dieser Methode, wie in Fig. 4 dargestellt, an Probekörpern mit einem Durchmesser von 80 mm und einer Dicke von 2 mm, die über ein Preßverfahren hergestellt werden. Für die verschiedenen Polymere, wie sie in den Ausführungsbeispielen zum Einsatz kommen, werden beispielsweise folgende Temperaturen für die Herstellung der Preßplatten eingesetzt: Polypropylen 200 °C; Polyethylen 220 °C; Polyamid 280 °C. Wie Fig. 4 zeigt, werden auf den kreisförmigen Probekörpern 22 zwei Leitsilberstreifen 23, 24 aufgebracht, deren Länge B mit ihrem Abstand L übereinstimmt, so daß eine quadratische Fläche sq (Square) definiert wird. Anschließend werden die Elektroden eines Widerstandsmeßgerätes 25 auf die Leitsilberstreifen 23, 24 gepreßt, und der Widerstandswert wird am Meßgerät 25 abgelesen. Als Meßspannung wird bei Widerständen bis 3 x 10⁷ Ohm/sq 9 Volt verwendet und ab 3 x 10⁷ Ohm/sq 100 Volt.

So besitzen die erfindungsgemäßen Kompositmaterialien insbesondere einen Oberflächenwiderstand, insbesondere spezifischen Oberflächenwiderstand, von weniger als 10⁸ Ohm, insbesondere weniger als 10⁷ Ohm, vorzugsweise weniger als 10⁶ Ohm, bevorzugt weniger als 10⁵ Ohm, besonders bevorzugt weniger als 10³ Ohm.

Des weiteren besitzen die erfindungsgemäßen Kompositmaterialien insbesondere einen Durchgangswiderstand (Volumenwiderstand), insbesondere spezifischen Durchgangswiderstand (Volumenwiderstand), von weniger als 10¹² Ohm · cm, insbesondere weniger als 10¹¹ Ohm · cm, vorzugsweise weniger als 10¹⁰ Ohm · cm, bevorzugt weniger als 10⁹ Ohm · cm, besonders bevorzugt weniger als 10⁸ Ohm · cm, ganz besonders bevorzugt weniger als 10⁷ Ohm · cm.

Darüber hinaus besitzen die erfindungsgemäßen Kompositmaterialien ausgezeichnete mechanische Eigenschaften, wie insbesondere ausgezeichnete Schlagfestigkeiten, Streck- und Bruchdehnungen, Streckspannungen, Zugmodule etc.

Schließlich ist weiterer Gegenstand der vorliegenden Erfindung - gemäß einem **dritten Aspekt** der vorliegenden Erfindung - die Verwendung der zuvor beschriebenen Kompositmaterialien (Verbundmaterialien) nach der vorliegenden Erfindung im Bereich der Elektronik und Elektrotechnik, der Computer-, Halbleiter- und Meßtechnik und -industrie, der Luft- und Raumfahrttechnik, der Verpackungsindustrie, der Automobilindustrie sowie der Kühltechnik.

Insbesondere können die zuvor beschriebenen Kompositmaterialien (Verbundmaterialien) Verwendung finden für die Herstellung von leitenden oder halbleitenden Bauteilen, Komponenten, Strukturen, Vorrichtungen oder dergleichen, insbesondere für den Bereich der Elektronik und Elektrotechnik, der Computer-, Halbleiter- und Meßtechnik und -industrie, der Luft- und Raumfahrttechnik, der Verpackungsindustrie, der Automobilindustrie sowie der Kühltechnik.

Die vorliegende Erfindung, insbesondere das erfindungsgemäße Verfahren und die auf diese Weise erhältlichen Kompositmaterialien (Verbundmaterialien) sind mit einer Vielzahl von Besonderheiten und vorteilhaften Eigenschaften verbunden, welche die Erfindung gegenüber dem Stand der Technik auszeichnen:

Im Rahmen der vorliegenden Erfindung lassen sich in zuverlässiger wie reproduzierter Art und Weise Kohlenstoffnanoröhren (CNTs) in organische Polymere bzw. Kunststoffe einarbeiten.

Im Rahmen der Erfindung resultieren Verbundmaterialien bzw. Komposite auf Basis von organischen Polymeren bzw. Kunststoffen einerseits und Kohlenstoffnanoröhren (CNTs) andererseits mit höheren Füllgraden bzw. Konzentrationen an Kohlenstoffnanoröhren (CNTs) und mit verbesserter Homogenität, was gleichermaßen zu einer Verbesserung der elektrischen wie mechanischen Eigenschaften führt. Insbesondere weisen die erfindungsgemäßen Komposit- bzw. Verbundmaterialien gegenüber dem Stand der Technik verbesserte Oberflächen- und Volumenwiderstände sowie eine verbesserte mechanische Beständigkeit auf.

Im Rahmen des erfindungsgemäßen Verfahrens lassen sich Kohlenstoffnanoröhren (CNTs) mit hohen Konzentrationen, exakten Dosiergenauigkeiten, hohen Durchsätzen und hervorragenden Homogenitäten in die vorgenannten Polymere bzw. Kunststoffe einarbeiten.

Im Rahmen der vorliegenden Erfindung lassen sich auch lösemittel- und/oder wasserempfindliche Polymere umsetzen. Beispielsweise ist bei Polyamiden hervorzuheben, daß diese - obwohl es sich um wasserempfindliche Polymere handelt, welche im allgemeinen bei Anwesenheit von Wasser beim Compoundieren nach dem Stand der Technik zum hydrolytischen Abbau neigen - im Rahmen des erfindungsgemäßen Verfahrens (selbst bei Anwesenheit von Wasser) ohne weiteres verarbeitet bzw. eingesetzt werden können, wobei es sogar möglich ist, eine wäßrige CNT-Suspension einzuführen, um ein entsprechendes Kompositmaterial herzustellen; dabei findet also kein hydrolytischer Abbau des Polymers statt, insbesondere da eine nur sehr kurzzeitige Belastung mit Wasser - und dies bei hohem Druck - stattfindet.

Im allgemeinen erreicht man erfindungsgemäß in den Endprodukten sehr kleine bzw. nahezu keine Restfeuchten, was bei der Eincompoundierung großer Mengen Wasser nicht zu erwarten gewesen wäre

Weitere Ausgestaltungen, Abwandlungen und Variationen der vorliegenden Erfindung sind für den Fachmann beim Lesen der Beschreibung ohne weiteres erkennbar und realisierbar, ohne daß er dabei den Rahmen der vorliegenden Erfindung verläßt.

Die vorliegende Erfindung wird anhand der nachfolgenden Ausführungsbeispiele veranschaulicht, welche die vorliegende Erfindung aber nicht beschränken sollen.

### AUSFÜHRUNGSBEISPIELE:

### Allgemeine Versuchsdurchführung

Unter Verwendung einer Rührwerkskugelmühle der Hosokawa Alpine AG, Augsburg, Deutschland, werden wäßrigen Dispersionen von Kohlenstoffnanoröhren mit variierenden Konzentrationen in Gegenwart von Dispergieradditiven (Dispergier- bzw. Netzmittel sowie Entschäumer) hergestellt, welche nachfolgend mittels einer Dosier-/Förderpumpe der ViscoTec Pumpen und Dosiertechnik GmbH, Töging/Inn, Deutschland, in eine Extrusionsvorrichtung (Coperion GmbH, vormals: Coperion Werner & Pfleiderer GmbH & Co. KG, Stuttgart, Deutschland) mit aufgeschmolzenern Polymer unter Homogenisierung bzw. Mischen und unter Entfernung der kontinuierlichen flüssigen Phase (Wasser) eingetragen wird. Nach Extrusion und Abkühlenlassen der so erhaltenen Mischung aus geschmolzenem Polymer und Kohlenstoffnanoröhren (CNTs) bis zum Erstarren des Polymers erhält man erfindungsgemäße Kompositmaterialien auf Basis von Polymer und Kohlenstoffnanoröhren (CNTs).

### Herstellung erfindungsgemäß einsetzbarer Dispergiermittel (Dispergatoren)

### Herstellungsbeispiel 1 (Beispiel 3 gemäß EP 0 154 678 A1)

Unter Schutzatmosphäre werden 7,7 Teile eines aliphatischen hexamethylendiisocyanatbasierten Polyisocyanates vom Biuret-Typ mit einem freien NCO-Gehalt von 22 % mit 23 Teilen Ethylglykolacetat und 10,2 Teilen eines monohydroxyfunktionellen Methoxypolyethylenglykols mit einem zahlenmittleren Molekulargewicht Mn von 750, gelöst in 15 Teilen Ethylglykolacetat, homogenisiert, mit 0,004 Teilen Dibutylzinndilaurat versetzt und auf 50 °C erwärmt. Nach Abreaktion eines Drittels der NCO-Gruppen werden 5,4 Teile Polyethylenglykol mit einem zahlenmittleren Molekulargewicht Mn von 800, gelöst in 15 Teilen Ethylglykolacetat, zugesetzt. Nachdem 66 % der eingesetzten NCO-Gruppen umgesetzt sind, wird mit 23 Teilen Ethylglykolacetat verdünnt und 1,7 Teile 1-(2-Aminoethyl)piperazin, zugesetzt. Man rührt noch bei 70 °C zwei Stunden. Das Produkt ist gelblich und leicht viskos.

### Herstellungsbeispiel 2 (Beispiel gemäß EP 1 640 389)

Beispiel für ein erfindungsgemäß einsetzbares Dispergiermittel auf Basis eines mit Polyethergruppen modifizierten Copolymers von ungesättigten 1,2-Säureanhydriden: Eine Mischung aus 80 g konjugierter Sonnenblumenfettsäure, 37 g Maleinsäureanhydrid und 42 g Polyoxyethylenallylmethylether mit einem mittleren Molekulargewicht von 450 werden vorgelegt und unter Rühren auf 137 °C aufgeheizt. Innerhalb von 4 Stunden wird eine Lösung von 4,4 g tert.-Butylperbenzoat in 53 g Dipropylenglykoldimethylether zugetropft. Nach beendeter Zugabe wird noch 0,5 Stunden bei 137 °C gerührt. Das erhaltene Produkt hat einen Festkörper von 75 %. 91 g dieses Produktes werden mit 84g eines primäres Monoaminalkoxilat mit einem EO/PO-Verhältnis von 70/30 und einem mittleren Molekulargewicht von 2.000 und 0,2 g para-Toluolsulfonsäure gemischt und 3 Stunden bei 170 °C gerührt. Anschließend wird ein Wasserabscheider montiert und 3 Stunden bei 170 °C das Reaktionswasser abdestilliert. Das erhaltene Produkt hat eine Aminzahl von < 1 mg KOH/g und eine Säurezahl von 46 mg KOH/g.

### Herstellung erfindungsgemäß einsetzbarer Entschäumer

Als Entschäumer können erfindungsgemäß z. B. Mineralölentschäumer (z. B. Beispiel 5 gemäß DE 32 45 482 A1) oder aber alternativ Silikonentschäumer (z. B. Beispiel 8 gemäß DE 199 17 186 C1) zum Einsatz kommen.

### Herstellung erfindungsgemäß einsetzbarer CNT-Dispersionen

Materialien: Wasser, Netz- bzw. Dispergiermittel (gemäß Beispiel), Entschäumer (gemäß Beispiel), MWCNTs (Baytubes^{®} C150P)
Geräte: Rührwerkskugelmühle mit Perlen, Pumpe, Vorlagebehälter mit Rührwerk (Dissolver)

### Beispielrezepturen:

| | |
|---|---|
| Entschäumer | 0,01%-10% |
| Netz- bzw. Dispergiermittel | 1%-20% |
| MWCNTs | 3%-10% |
| Wasser | ad 100 % |

### Herstellungsverfahren von 50 kg einer 3%igen CNT-Dispersion in Wasser:

45,8 kg Wasser werden in einen Vorlagebehälter dosiert und mit geringen Scherkräften ständig umgewälzt. Anschließend werden unter geringen Scherkräften 2,3 kg Netz- bzw. Dispergiermittel zudosiert und etwa weitere 10 Minuten gemischt. Hierzu werden langsam 0,5 kg Entschäumer hinzugefügt und 5 Minuten ebenfalls bei geringen Scherkräften eingearbeitet, bis das Medium absolut homogen vorliegt. Es folgt eine sehr langsame Zudosierung von 1,5 kg Carbon Nanotubes in das vorliegende Medium. Um die ständige Umwälzung der Vordispersion zu gewährleisten, ist bei steigendem CNT-Gehalt gegebenenfalls eine Erhöhung der Scherkräfte des Dissolvers erforderlich. Befinden sich alle Komponenten im Vorlagebehälter, läßt man die Vordispersion 30 Minuten bei mittleren Scherkräften rühren, bis sie in sich homogen erscheint. Nun erfolgt eine kontinuierliche Dispergierung mit Rückvermischung über die Rührwerkskugelmühle. Durch einen Ansaugschlauch am Ablaßventil des Vorlagebehälters wird über eine Pumpe die Rührwerkskugelmühle mit der Dispersion gespeist und im Mahlraum durch Zirkonoxidperlen dispergiert. Ein hinter dem Mahlraum angelegter Ablaßschlauch wird über dem Vorlagebehälter eingehängt, so daß der dispergierte Teil wieder in den Vorlagebehälter hineinfließt und ständig durch die Rotation des Dissolvers mit dem anderen Teil der Dispersion vermischt wird. Die kontinuierliche Dispergierung wird ungefähr 5 Stunden lang durchgeführt oder solange, bis ein Glasablauf der Dispersion eine glatte, glänzende und agglomeratfreie Oberfläche aufweist.

### Beschreibung der Rührwerkskugelmühle:

Standard-Rührwerkskugelmmühle der Hosokawa Alpine AG vom Typ 90 AHM und 132 AHM

Auswahl der Ausrüstung mit folgenden Zielen:
- Aufbrechen des harten Granulats durch Mahlkugeln (mindestens Größe 1,4 bis 1,7 mm bzw. 2,0 bis 2,5 mm)
- Reduzierung des Maschinendrucks (Spaltweite der Siebpatrone > CNT-Granulat, 1 mm; großer Schlauchdurchmesser)
- Optimierung der Kühlung (Kühlung des doppelwandigen Mahlbehälters, SiC-Einschubrohr; Kühlung des doppelwandigen Kreislaufbehälters)
- Reduzierung des Abriebs (Einsatz eines PU-Rotors)
- Gute Umwälzung im Kreislaufbehälter (Einsatz einer Dissolverscheibe)

### Beschreibung des Dispergierverfahrens (chronologisch):

- Einfüllen der Trägerflüssigkeit in den Kreislaufbehälter
- Zugabe des Entschäumers (z. B. Byk^{®} 028, BYK-Chemie GmbH): Homogenisieren durch Rühren mit Dissolverscheibe
- Zugabe des Dispergieradditivs (z. B. Byk^{®} LP-N 6587, BYK-Chemie GmbH): Homogenisieren durch Rühren mit Dissolverscheibe
- Anschalten der Anlage: Homogenisieren der Lösung in der Mühle
- Schrittweise Zugabe der CNTs (Zugabe in einem Schritt aufgrund starker Viskositätsentwicklung nicht vorteilhaft)
- Für 132 AHM / 2,3 kg CNT / Dispersion mit 8 % Feststoff
   5 % CNT nach ca. 50 Minuten in Dispersion
   6 % CNT nach ca. 110 Minuten in Dispersion
   7 % CNT nach ca. 240 Minuten in Dispersion
   8 % CNT nach ca. 370 Minuten in Dispersion
- Weitere Dispergierung der Dispersion bis zu definierter Zeit / definiertem Energieeintrag / definierter Dispersionsgüte

### Anlagenbeschreibung:

Die komplette Anlage ist in drei Teilanlagen untergliedert, nämlich Dispergiereinheit (Hosokawa Alpine AG), Hochdruckförderpumpe (Fa. ViscoTec) und Extruder (Fa. Coperion). Die Dispergiereinheit besteht (verfahrenstechnisch) aus Rührwerkskugelmühle 132 AHM (Fa. Hosokawa Alpine), 2 Schlauchpumpen, 2 Behältern ä 25 Litern mit Dissolverrührer, 9 Ventilen, Schlauchleitungen.

Besondere Eigenschaften der Dispergiereinheit:
- Betrieb in verschiedenen Fahrweisen möglich (Kreislauffahrweise, Ein-Passagen-Fahrweise, Pendelfahrweise)
- Aufteilung der Anlage für stark unterschiedlich Produkte möglich
- Minimierung der Totzeit (paralleles Anmischen während Kreislaufmahlbetrieb möglich)

Die in den einzelnen Versuchen mit den betreffenden Polymeren erhaltenen Ergebnisse sind in den nachfolgenden Tabellen 1 bis 4 zusammengefaßt, wobei als Kunststoffe Polyamid (PA) (Tabelle 1), Polyethylen (PE) (Tabelle 2), Polypropylen (PP) (Tabelle 3) bzw. thermoplastische Elastomere (TPE) (Tabelle 4) eingesetzt wurden.

Legende

| | |
|---|---|
| **Temperatur** | Temperatur im Heizblock |
| **Drehzahl** | Drehzahl der Welle |
| **Durchsatz** | gravimetrisch von der Waagensteuerung bestimmt |
| **Vakuum** | Vakuum angeschlossen ja/nein |
| **Zudosiertes Medium** | Dispersionsname |
| **Durchsatz Medium** | Durchsatz Pumpe |
| **Auslastung** | aus der Motorleistung berechnet |
| **Massedruck** | Austritt Schneckenspitze in Schmelze |
| **Massetemperatur** | Austritt Schneckenspitze in Schmelze |
| **Pumpe** | Pumpenart |
| **Eindosierung** | verwendete Dosiereinrichtung |
| **Druck Eindosierung** | Druck bei Eindosierung der Dispersion |
| **Füllstoff im Compound** | gewünschte Konzentration im Compound |
| **Feuchtegehalt bei 80°C** | gemessen |
| **Dichte** | gemessen (ISO 1183-1) |
| **MVR 230°C/2,16kg** | gemessen (ISO 1133) |
| **Schlagzähigkeit, Charpy** | gemessen (ISO 179-2) |
| **Kerbschlagzähigkeit Charpy** | gemessen (ISO 179-2) |
| **Zug-Modul** | gemessen (ISO 527-1/-2) |
| **Streckspannung** | gemessen (ISO 527-1/-2) |
| **Streckdehnung** | gemessen |
| **Nom. Bruchdehnung** | gemessen |
| **elektr. Widerstand** | gemessen |
| **Oberflächenwiderstand** | gemessen |
| **Viskositätszahl** | gemessen (ISO 307) |

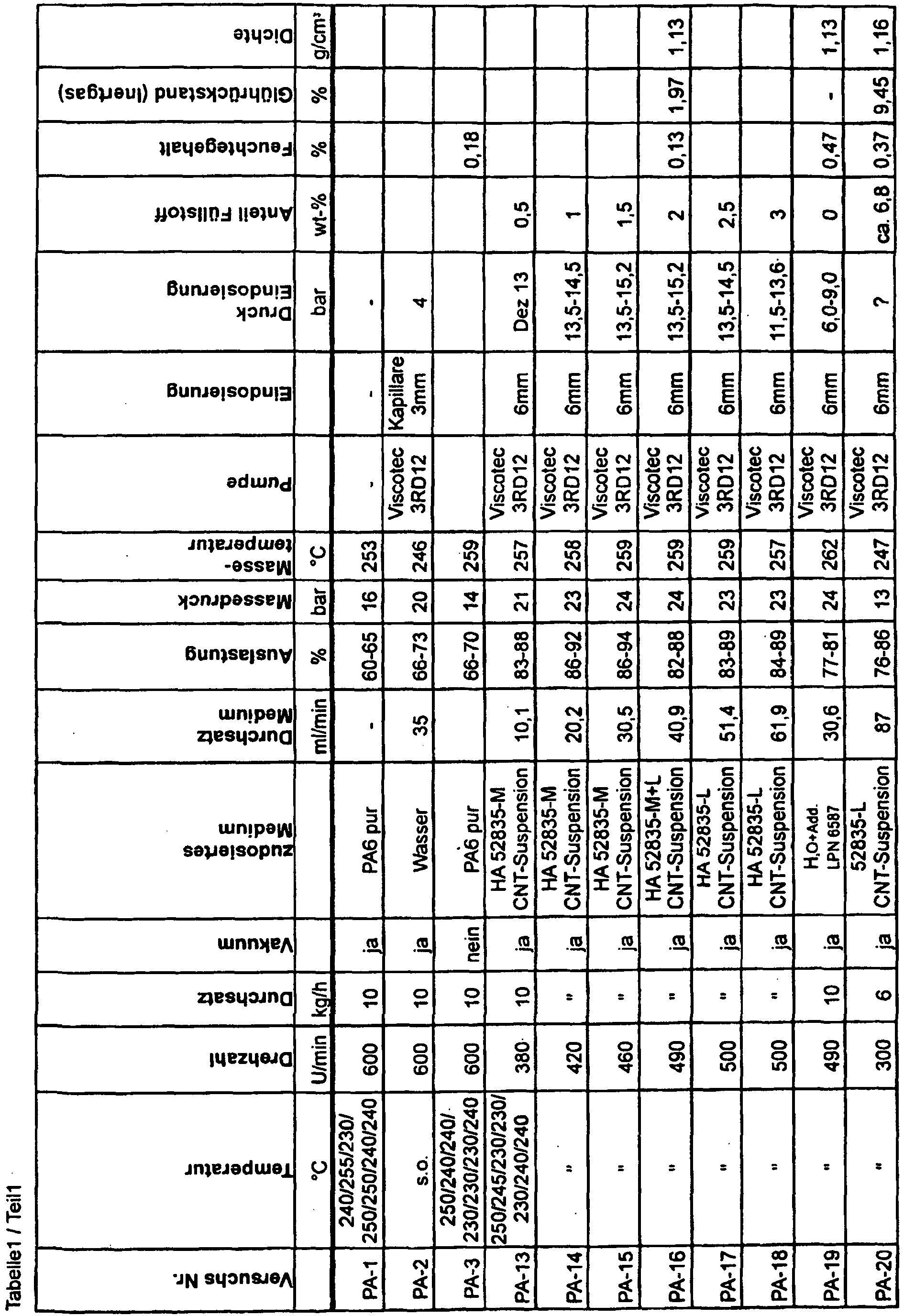

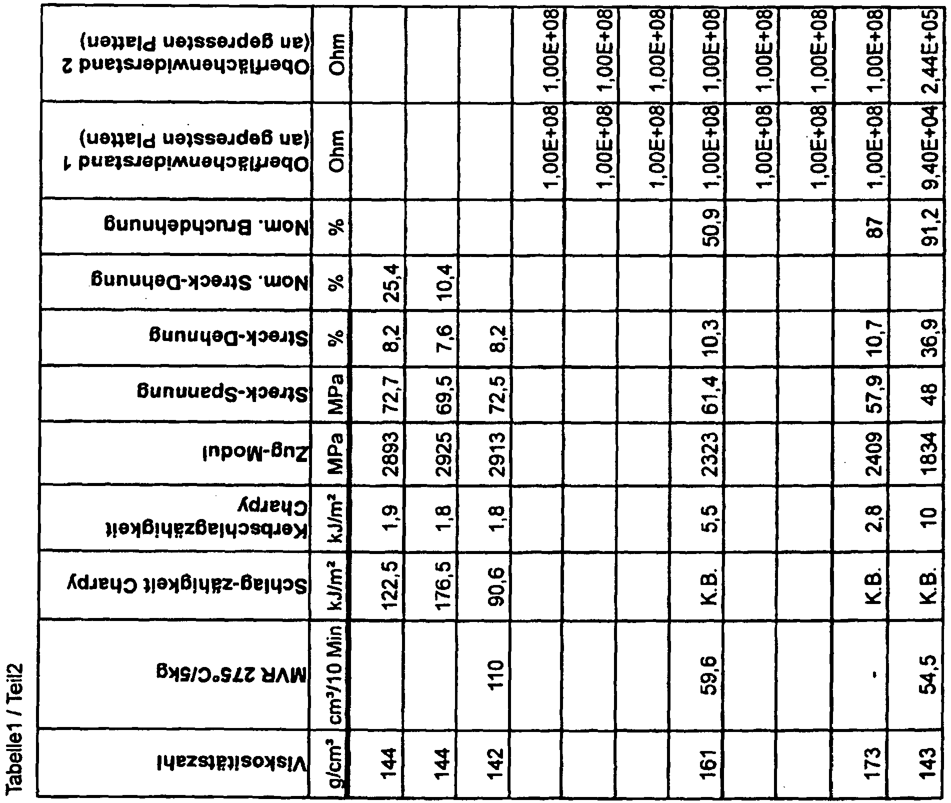

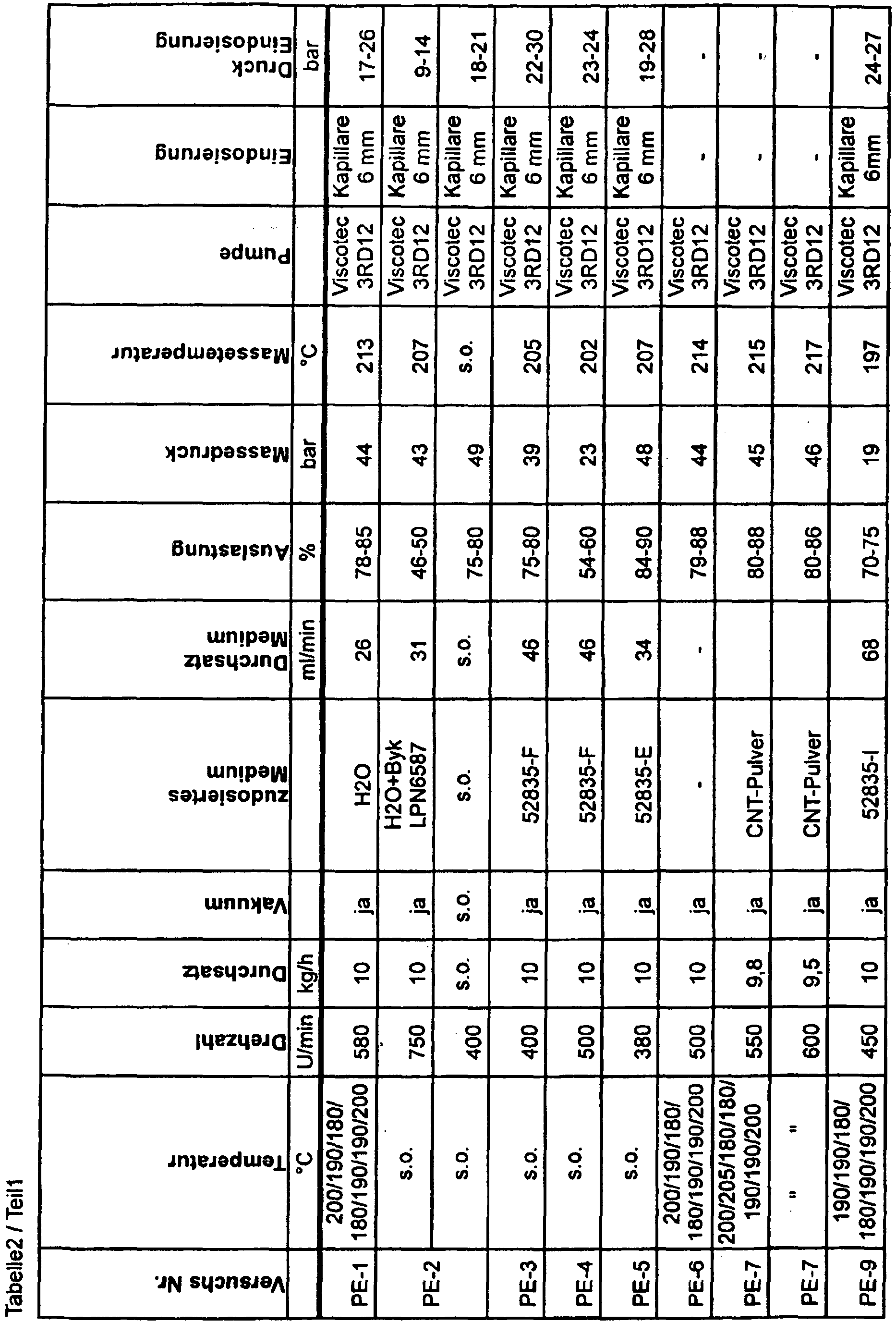

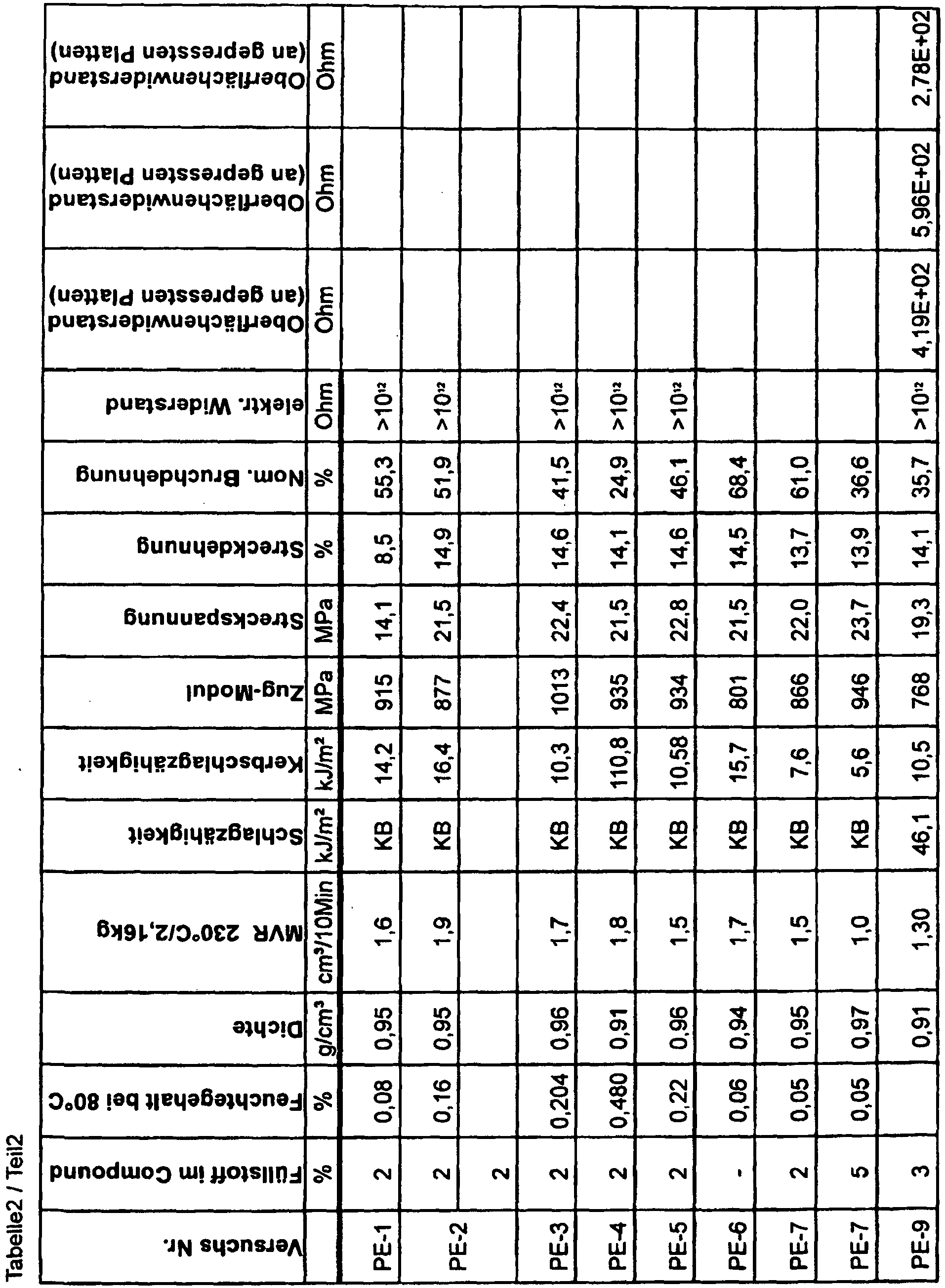

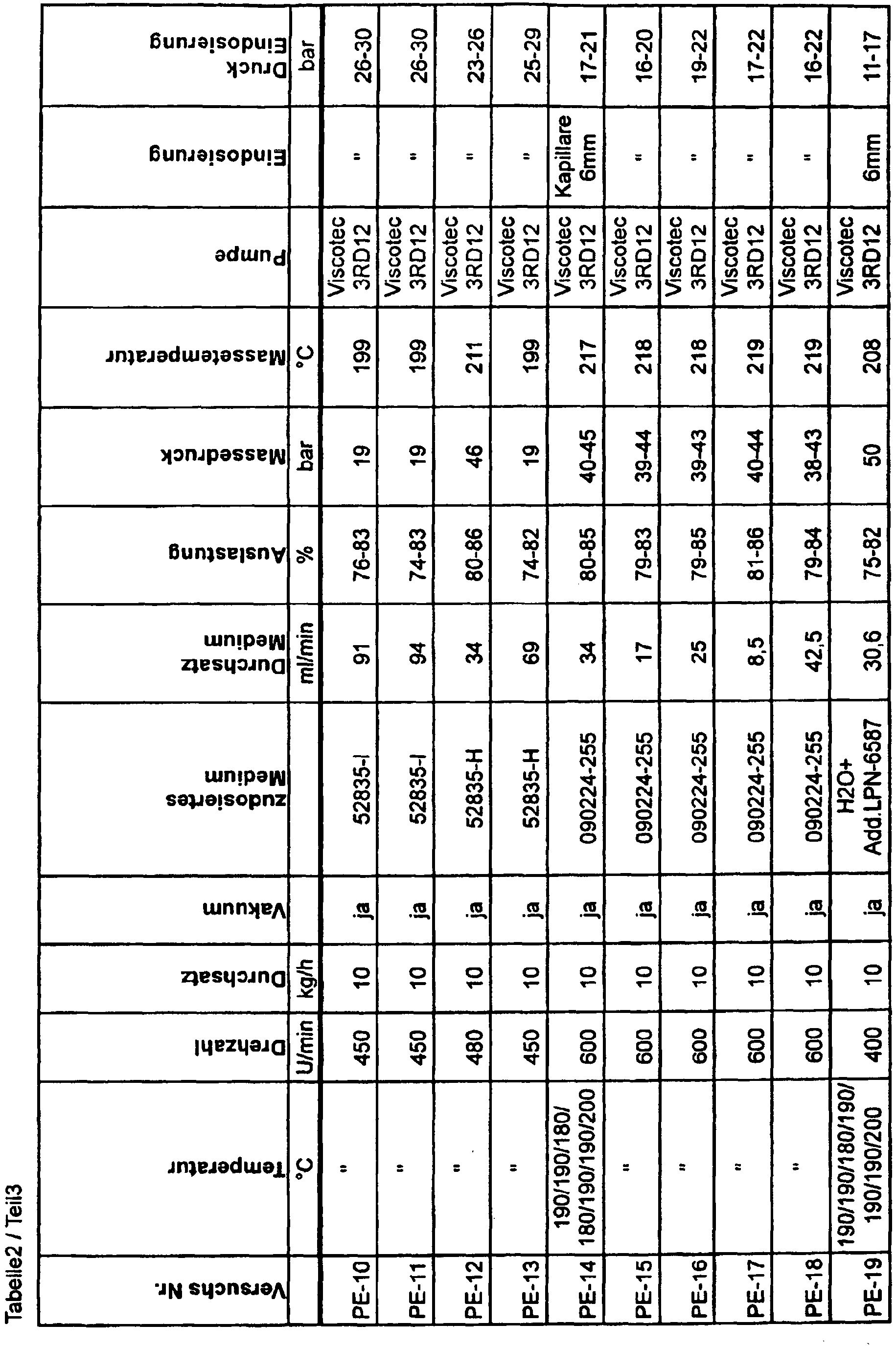

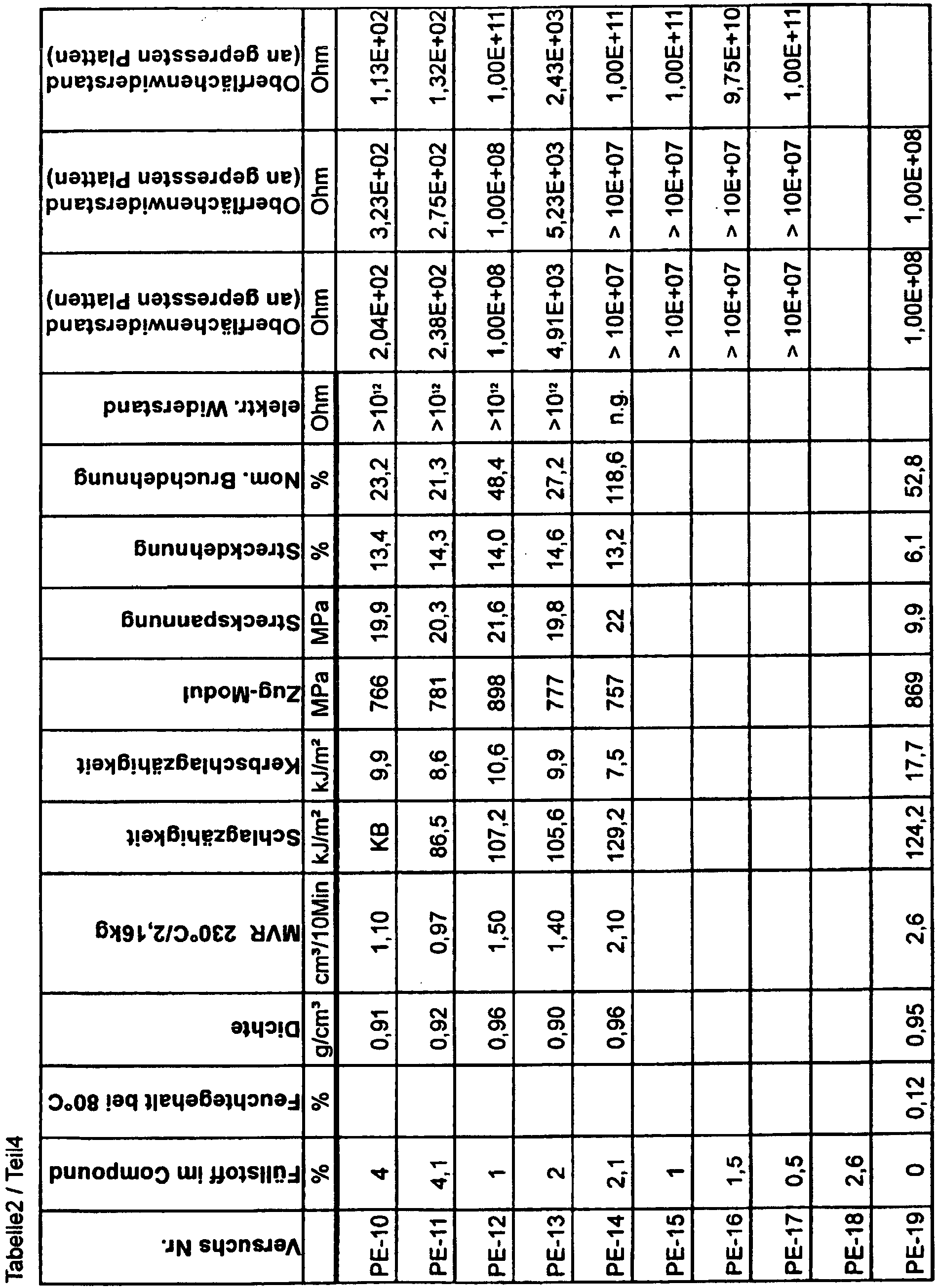

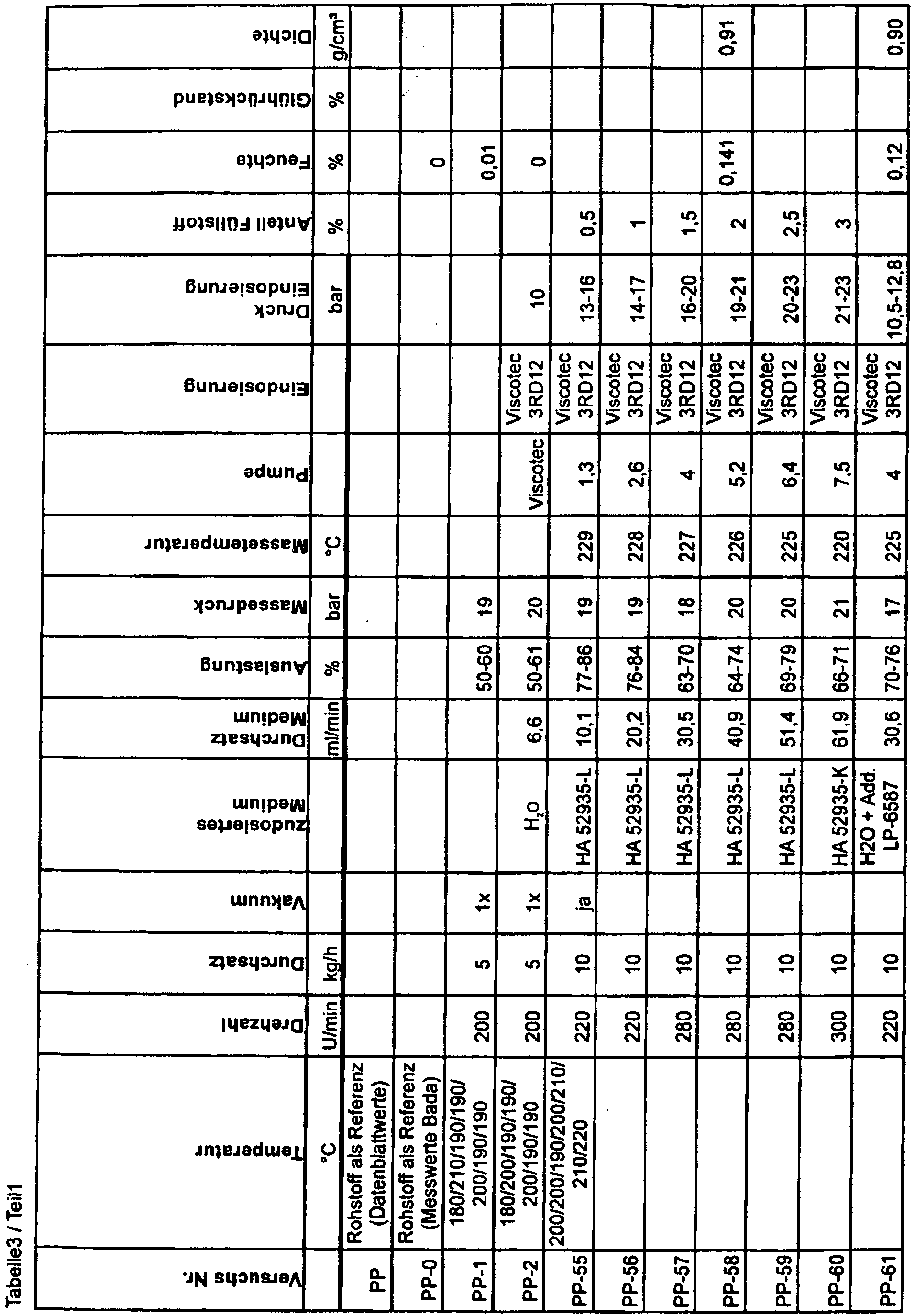

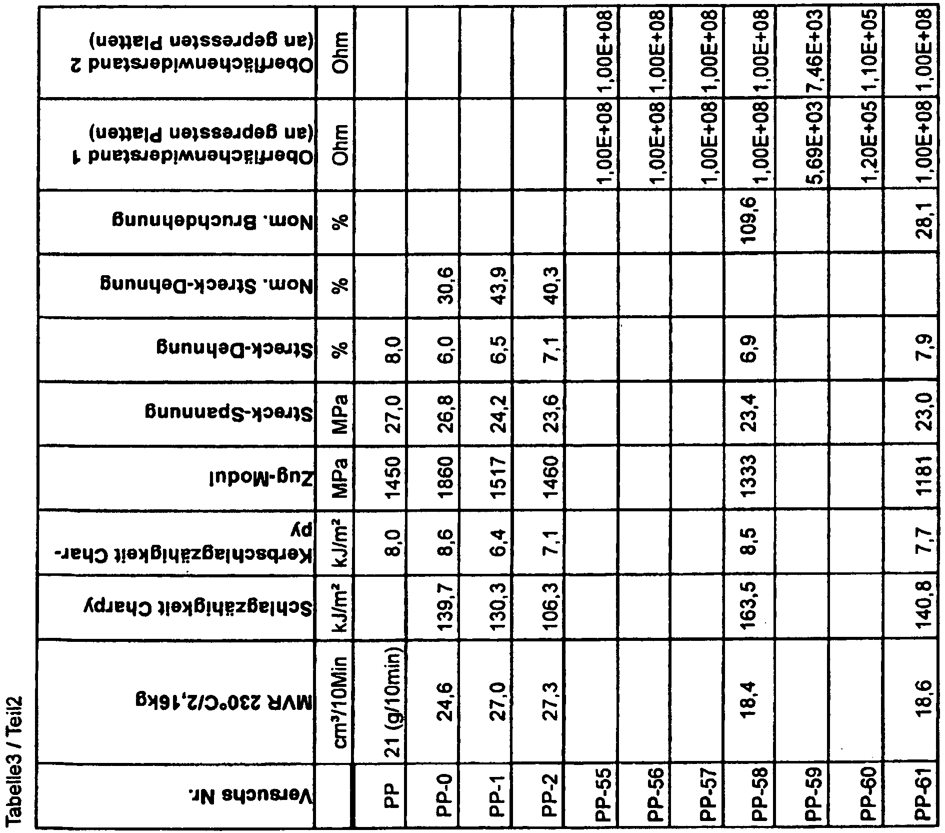

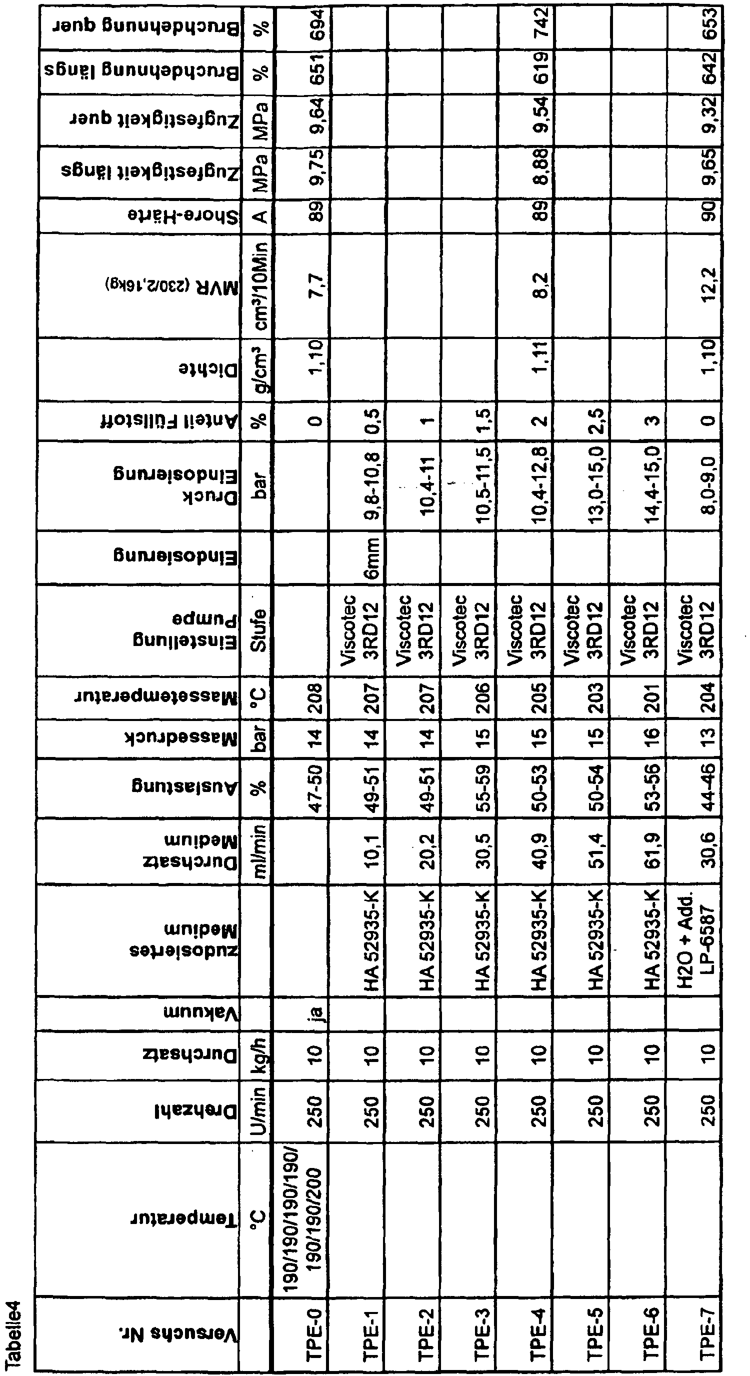

Weitere Versuchsergebnisse sind in der nachfolgenden Tabelle 5 dargestellt:

**Tabelle 5:**

| Versuchsnr. | Bemerkung | Pressplatten | Presstemp. | Leitfähigkeit Ω/Quadrat | Messspannung V | TEM |
|---|---|---|---|---|---|---|
| PE-3 | | x | 220 °C | 2,53E+04 | 9 | |
| PE-5 | | x | 220 °C | 9,17E+03 | 9 | |
| PE-9 | | x | 220 °C | 2,78E+02 | 9 | |
| PE-10 | | x | 220 °C | 1,13E+02 | 9 | |
| PE-11 | | x | 220 °C | 1,32E+02 | 9 | |
| PE-12 | | x | 220 °C | > 1,00E+11 | 9 | |
| PE-13 | | x | 220 °C | 2,43E+03 | 9 | |
| PE-14 | | x | 220 °C | > 1,00E+11 | 100 | |
| PE-15 | | x | 220 °C | > 1,00E+11 | 100 | |
| PE-16 | | x | 220 °C | 9,75E+10 | 100 | |
| PE-17 | | x | 220 °C | > 1,00E+11 | 100 | |
| PE-18 | | x | 220 °C | > 1,00E+11 | 100 | |
| PE-19 | ohne CNT | - | 220 °C | 2,43E+03 | 9 | |
| PE-20 | | x | 220 °C | > 1,00E+11 | 100 | |
| PE-21 | | x | 220 °C | 4,00E+10 | 100 | |
| PE-22 | | x | 220 °C | 2,48E+07 | 100 | |
| PE-23 | | x | 220 °C | 5,18E+04 | 9 | x |
| PE-24 | | x | 220 °C | 2,24E+03 | 9 | |
| PE-25 | | x | 220 °C | 4,59E+02 | 9 | |
| PE-26 | | x | 220 °C | > 1,00E+11 | 100 | |
| PE-27 | | x | 220 °C | 5,51E+10 | 100 | |
| PE-28 | | x | 220 °C | 1,37E+07 | 9 | |
| PE-29 | | x | 220 °C | 3,77E+04 | 9 | |
| PE-30 | | x | 220 °C | 8,60E+02 | 9 | |
| PE-31 | | x | 220 °C | 3,72E+02 | 9 | |
| PP-55 | | x | 200 °C | > 1,00E+11 | 100 | |
| PP-56 | | x | 200 °C | 8,26E+10 | 100 | |
| PP-57 | | x | 200 °C | 1,48E+09 | 100 | |
| PP-58 | | x | 200 °C | 4,27E+04 | 9 | x |
| PP-59-1 | | x | 200 °C | 1,17E+03 | 9 | |
| PP-59-2 | | x | 200 °C | 7,12E+03 | 9 | |
| PP-61 | ohne CNT | - | 200 °C | | | |
| PA-13 | | x | 280 °C | > 1,00E+11 | 100 | |
| PA-14 | | x | 280 °C | 1,94E+10 | 100 | |
| PA-15 | | x | 280 °C | 6,42E+04 | 9 | |
| PA-16 | | x | 280 °C | 1,35E+03 | 9 | x |
| PA-17 | | x | 280 °C | 9,68E+02 | 9 | |
| PA-18 | | x | 280 °C | 9,72E+02 | 9 | |
| PA-19 | ohne CNT | - | 280 °C | | | |

## Patentansprüche

1. Verfahren zur Herstellung eines Kompositmaterials auf Basis von mindestens einem Polymer einerseits und Kohlenstoffnanoröhren (CNTs) andererseits, wobei das Verfahren die folgenden Verfahrensschritte umfasst:
(a) Bereitstellen einer Dispersion oder Lösung von Kohlenstoffnanoröhren (CNTs) in einer kontinuierlichen flüssigen Phase durch Dispergieren oder Solubilisieren von Kohlenstoffnanoröhren (CNTs) in einem Dispersions- oder Lösemittel,
wobei die Herstellung der Dispersion oder Lösung in Verfahrensschritt (a) durch Mischen in der kontinuierlichen Phase unter Druckeintrag und/oder Ultraschalleintrag erfolgt und wobei die Kohlenstoffnanoröhren (CNTs) in einer Konzentration von 0,001 bis 30 Gew.-%, bezogen auf die resultierende Dispersion oder Lösung, eingesetzt werden; nachfolgend
(b) Eintragen der in Verfahrensschritt (a) hergestellten Dispersion oder Lösung von Kohlenstoffnanoröhren (CNTs) in die Schmelze mindestens eines Polymers unter Homogenisierung und unter Entfernung der kontinuierlichen Phase,
wobei das Eintragen der in Verfahrensschritt (a) hergestellten Dispersion oder Lösung von Kohlenstoffnanoröhren (CNTs) in die Schmelze des Polymers mittels einer Förder- und/oder Dosierpumpe unter Druckbeaufschlagung und mit konstanter Dosiergeschwindigkeit und/oder konstanter Dosiergenauigkeit erfolgt,
wobei Verfahrensschritt (b) in einer Extrusionsvorrichtung erfolgt, wobei die Extrusionsvorrichtung Mischeinrichtungen zur Homogenisierung der in Verfahrensschritt (a) bereitgestellten Dispersion oder Lösung von Kohlenstoffnanoröhren (CNTs) mit der Schmelze des Polymers und eine Entgasungseinrichtung zu Zwecken der Entfernung der kontinuierlichen Phase aufweist, und
wobei ein Restgehalt an kontinuierlicher Phase von höchstens 1 Gew.-%, bezogen auf das Endprodukt, eingestellt wird; dann
(c) Abkühlenlassen der in Verfahrensschritt (b) erhaltenen Mischung aus geschmolzenem Polymer und Kohlenstoffnanoröhren (CNTs) bis zum Erstarren des Polymers und nachfolgender Erhalt eines Kompositmaterials, welches mindestens ein Polymer und Kohlenstoffnanoröhren (CNTs) umfasst,

2. Verfahren nach Anspruch 1, **dadurch gekennzeichnet,**
**dass** als Polymer ein thermoplastisches Polymer eingesetzt wird, ausgewählt aus der Gruppe von Polyamiden, Polyacetaten, Polyketonen, Polyolefinen, Polycarbonaten, Polystyrolen, Polyestern, Polyethern, Polysulfonen, Polyfluorpolymeren, Polyurethanen, Polyamidimiden, Polyarylaten, Polyarylsulfonen, Polyethersulfonen, Polyarylsulfiden, Polyvinylchloriden, Polyetherimiden, Polytetrafluorethylenen, Polyetherketonen, Polylactaten sowie deren Mischungen und Copolymeren; und/oder
**dass** das eingesetzte Polymer ausgewählt ist aus thermoplastischen Polymeren aus der Gruppe von Polyamiden; Polyolefinen; Polyethylenterephtalaten (PET) und Polybutylenterephtalaten (PBT); thermoplastischen Elastomeren (TPE), thermoplastischen Elastomeren auf Olefinbasis (TPE-O oder TPO), vernetzten thermoplastischen Elastomeren auf Olefinbasis (TPE-V oder TPV), thermoplastischen Elastomeren auf Urethanbasis (TPE-U oder TPU), thermoplastischen Copolycstcrn (TPE-E oder TPC), thermoplastischen Styrol-Blockcopolymeren (TPE-S oder TPS), thermoplastischen Copolyamiden (TPE-A oder TPA); thermoplastischem Acrylnitril/Butadien/Styrol (ABS); Polylactaten (PLA); Polymethyl(meth)acrylaten (PMA oder PMMA); Polyphenylensulfiden (PPS); sowie deren Mischungen und Copolymeren.

3. Verfahren nach einem der vorangehenden Ansprüche, **dadurch gekennzeichnet, dass** das in Verfahrensschritt (a) durchgeführte Dispergieren oder Solubilisieren der Kohlenstoffnanoröhren (CNTs) in einer Rührwerkskugelmühle und/oder unter Ultraschalleintrag erfolgt und/oder dass das in Verfahrensschritt (a) durchgeführte Dispergieren oder Solubilisieren der Kohlenstoffnanoröhren (CNTs) mittels Hochdruckscherdispergierung erfolgt; und/oder
dass die Kohlenstoffnanoröhren (CNTs) in einer Konzentration von 0,01 bis 20 Gew.-%, bezogen auf die resultierende Dispersion oder Lösung, eingesetzt werden; und/oder
dass die Herstellung der Dispersion oder Lösung in Verfahrensschritt (a) durch schrittweise oder chargenweise Zugabe der Kohlenstoffnanoröhren (CNTs) in die kontinuierliche flüssige Phase erfolgt.

4. Verfahren nach einem der vorangehenden Verfahrensschritte, **dadurch gekennzeichnet,**
**dass** der Verfahrensschritt (a) in Gegenwart mindestens eines Dispergiermittels (Dispergators) durchgeführt wird, wobei das Dispergiermittel (Dispcrgator) in Mengen von 10 bis 300 Gew.-%, bezogen auf die Kohlenstoffnanoröhren (CNTs), eingesetzt wird und/oder wobei das Dispergiermittel (Dispergator) ausgewählt ist aus der Gruppe von Netzmitteln und Tensiden und/oder wobei das Dispergiermittel (Dispergator) eine zahlenmittlere Molekularmasse von mindestens 1.000 g/mol aufweist; und/oder
**dass** Verfahrensschritt (a) in Gegenwart mindestens eines Entschäumers durchgeführt wird, ausgewählt aus der Gruppe von mineralölbasierten oder silikonbasierten Entschäumern und/oder in Mengen von 0,1 bis 300 Gew.-%, bezogen auf die Kohlenstoffnanoröhren (CNTs), und/oder in Mengen von 0,01 bis 20 Gew.-%, bezogen auf die Dispersion oder Lösung.

5. Verfahren nach einem der vorangehenden Verfahrensschritte, **dadurch gekennzeichnet,**
**dass** als kontinuierliche flüssige Phase ein wässriges, organisches oder wässrigorganisches Lösungs- oder Dispersionsmittel eingesetzt wird und/oder dass als kontinuierliche flüssige Phase ein unter Dispergier- oder Solubilisierungsbedingungen im flüssigen Aggregatzustand vorliegendes Lösungs- oder Dispersionsmittel eingesetzt wird; und/oder
**dass** die kontinuierliche Phase bei Atmosphärendruck (101,325 kPa) einen Siedepunkt im Temperaturbereich von 20 bis 300 °C aufweist; und/oder dass das Eintragen der in Verfahrensschritt (a) hergestellten Dispersion oder
Lösung von Kohlenstoffnanoröhren (CNTs) mit einem Förderdruck von 2 bis 100 bar erfolgt.

6. Verfahren nach einem der vorangehenden Ansprüche, **dadurch gekennzeichnet,**
**dass** die Extrusionsvorrichtung als Schneckenextruder ausgebildet ist; und/oder
**dass** die Extrusionsvorrichtung in mehrere Abschnitte unterteilt ist, umfassend einen ersten Abschnitt zum Eintragen des mindestens einen Polymers, gefolgt von einem Aufschmelzabschnitt zum Aufschmelzen des Polymers, wiederum gefolgt von einem Einführabschnitt zum Einführen der Dispersion oder Lösung der Kohlenstoffnanoröhren (CNTs), wiederum gefolgt von einem Homogenisierungs- und Entgasungsabschnitt, welchem sich wiederum ein Austragsabschnitt anschließt.

7. Verfahren nach einem der vorangehenden Ansprüche, **dadurch gekennzeichnet, dass** die Kohlenstoffnanoröhren (CNTs) in Mengen von 0,001 bis 20 Gew.-%, bezogen auf das Kompositmaterial aus Polymer und Kohlenstoffnanoröhren (CNTs), eingearbeitet werden.

8. Verfahren nach einem der vorangehenden Ansprüche, **dadurch gekennzeichnet,**
• **dass** die eingesetzten Kohlenstoffnanoröhren (CNTs) aus einwandigen Kohlenstoffnanoröhren (SWCNTs bzw. SWNTs) oder mehrwandigen Kohlenstoffnanoröhren (MWCNTs bzw. MWNTs) ausgewählt werden und/oder
• **dass** die eingesetzten Kohlenstoffnanoröhren (CNTs) mittlere Innendurchmesser von 0,4 bis 50 nm aufweisen und/oder
• **dass** die eingesetzten Kohlenstoffnanoröhren (CNTs) mittlere Außendurchmesser von 1 bis 60 nm aufweisen und/oder
• **dass** die eingesetzten Kohlenstoffnanoröhren (CNTs) mittlere Längen von 0,01 bis 1.000 µm aufweisen und/oder
• **dass** die eingesetzten Kohlenstoffnanoröhren (CNTs) eine Zugfestigkeit pro Kohlenstoffnanoröhre von mindestens 1 GPa aufweisen und/oder
• **dass** die eingesetzten Kohlenstoffnanoröhren (CNTs) einen Elastizitätsmodul pro Kohlenstoffnanoröhre von mindestens 0,1 TPa aufweisen und/oder
• **dass** die eingesetzten Kohlenstoffnanoröhren (CNTs) eine thermische Leitfähigkeit von mindestens 500 W/mK aufweisen und/oder
• **dass** die eingesetzten Kohlenstoffnanoröhren (CNTs) eine elektrische Leitfähigkeit von mindestens 10³ S/cm aufweisen und/oder
• **dass** die eingesetzten Kohlenstoffnanoröhren (CNTs) eine Schüttdichte im Bereich von 0,01 bis 0,3 g/cm³ aufweisen.

9. Verfahren nach einem der vorangehenden Ansprüche, **dadurch gekennzeichnet, dass** die eingesetzten Kohlenstoffnanoröhren vom Zylinder-Typ, Scroll-Typ oder vom Typ mit zwiebelartiger Struktur und/oder cinwandig oder mehrwandig ausgebildet sind und/oder dass die eingesetzten Kohlenstoffnanoröhren (CNTs) ein Verhältnis von Länge zu Außendurchmesser von ≥ 5 aufweisen und/oder dass die Kohlenstoffnanoröhren (CNTs) in Form von Agglomeraten eingesetzt werden, wobei die Agglomerate einen mittleren Durchmesser im Bereich von 0,05 bis 5 mm aufweisen, und/oder dass die eingesetzten Kohlenstoffnanoröhren (CNTs) einen mittleren Durchmesser von 3 bis 100 nm aufweisen und/oder dass die Kohlenstoffnanoröhren (CNTs) vom Scroll-Typ mit mehreren Graphenlagen, welche zu einem Stapel zusammengefasst oder aufgerollt vorliegen, ausgewählt sind.

10. Verfahren nach einem der vorangehenden Ansprüche, **dadurch gekennzeichnet, dass** das Verfahren kontinuierlich oder semikontinuierlich durchgeführt wird, wobei Verfahrensschritt (a) diskontinuierlich und/oder die nachfolgenden Verfahrensschritte (b) und (c) kontinuierlich durchgeführt werden.

11. Kompositmaterial, umfassend mindestens ein Polymer einerseits und Kohlenstoffnanoröhren (CNTs) andererseits, erhältlich durch ein Verfahren nach einem der vorangehenden Ansprüche.

12. Kompositmaterial nach Anspruch 11,
umfassend mindestens ein Polymer einerseits und Kohlenstoffnanoröhren (CNTs) andererseits, wobei das Kompositmaterial einen Gehalt an Kohlenstoffnanoröhren (CNTs) von 0,001 bis 20 Gew.-%, bezogen auf das Kompositmaterial, aufweist; und/oder
umfassend mindestens ein Dispergiermittel (Dispcrgator) in Mengen von 0,01 bis 300 Gew.-% bezogen auf die Kohlenstoffnanoröhren (CNTs).

13. Kompositmatcrial nach einem der vorangehenden Ansprüche,
umfassend mindestens einen Entschäumer in Mengen von 0,01 bis 200 Gew.-%, bezogen auf die Kohlenstoffnanoröhren (CNTs); und/oder
**gekennzeichnet durch** einen Oberflächenwiderstand von weniger als 10⁸ Ohm; und/oder
**gekennzeichnet durch** einen Durchgangswiderstand (Volumenwiderstand) von weniger als 10¹² Ohm · cm.

14. Verwendung des Kompositmaterials nach einem der vorangehenden Ansprüche im Bereich der Elektronik und Elektrotechnik, der Computer-, Halbleiter- und Messtechnik und -industrie, der Luft- und Raumfahrttechnik, der Verpackungsindustrie, der Automobilindustrie sowie der Kühltechnik.

15. Verwendung eines Kompositmaterials nach einem der vorangehenden Ansprüche zur Herstellung von leitenden oder halbleitenden Bauteilen, Komponenten, Strukturen oder Vorrichtungen für den Bereich der Elektronik und Elektrotechnik, der Computer-, Halbleiter- und Messtechnik und -industrie, der Luft- und Raumfahrttechnik, der Verpackungsindustrie, der Automobilindustrie sowie der Kühltechnik.

## Claims

1. Process for producing a composite based on firstly at least one polymer and secondly carbon nanotubes (CNTs), wherein the process comprises the following process steps:
(a) provision of a dispersion or solution of carbon nanotubes (CNTs) in a continuous liquid phase by dispersing or solubilizing carbon nanotubes (CNTs) in a dispersion medium or solvent,
where the production of the dispersion or solution in process (a) is effected by mixing in the continuous phase with application of pressure and/or input of ultrasound and the carbon nanotubes (CNTs) are used in a concentration of from 0.001 to 30% by weight, based on the resulting dispersion or solution; then
(b) introduction of the dispersion or solution of carbon nanotubes (CNTs) produced in process step (a) into the melt of at least one polymer with homogenization and removal of the continuous phase
where the introduction of the dispersion or solution of carbon nanotubes (CNTs) produced in process step (a) into the melt of the polymer is effected by means of a transport and/or metering pump with application of pressure and with a constant metering rate and/or constant metering precision,
process step (b) is carried out in an extrusion apparatus, where the extrusion apparatus has mixing devices for homogenizing the dispersion or solution of carbon nanotubes (CNTs) provided in process step (a) with the melt of the polymer and a degassing device for removing the continuous phase, and
a residual content of continuous phase of not more than 1% by weight, based on the end product, is set; then
(c) allowing the mixture of molten polymer and carbon nanotubes (CNTs) obtained in process step (b) to cool until the polymer solidifies and a composite material comprising at least one polymer and carbon nanotubes (CNTs) is subsequently obtained.

2. Process according to Claim 1, **characterized**
**in that** a thermoplastic polymer selected from the group consisting of polyamides, polyacetates, polyketones, polyolefins, polycarbonates, polystyrenes, polyesters, polyethers, polysulphones, polyfluoropolymers, polyurethanes, polyamidimides, polyarylates, polyaryl sulphones, polyether sulphones, polyaryl sulphides, polyvinyl chlorides, polyetherimides, polytetrafluoroethylenes, polyether ketones, polylactates and mixtures and copolymers thereof is used as polymer; and/or
**in that** the polymer used is selected from among thermoplastic polymers from the group consisting of polyamides; polyolefins, polyethylene terephthalates (PET) and polybutylene terephthalates (PBT); thermoplastic elastomers (TPE), thermoplastic elastomers based on olefins (TPE-O or TPO), crosslinked thermoplastic elastomers based on olefins (TPE-V or TPV), thermoplastic elastomers based on urethanes (TPE-U or TPU), thermoplastic copolyesters (TPE-E or TPC), thermoplastic styrene block copolymers (TPE-S or TPS), thermoplastic copolyamides (TPE-A or TPA); thermoplastic acrylonitrile-butadiene-styrene (ABS); polylactates (PLA); polymethyl (meth)acrylates (PMA or PMMA); polyphenylene sulphides (PPS); and mixtures and copolymers thereof.

3. Process according to any of the preceding claims, **characterized**
**in that** the dispersing or solubilizing of the carbon nanotubes (CNTs) carried out in process step (a) is effected in a stirred ball mill and/or with input of ultrasound and/or in that the dispersing or solubilizing of the carbon nanotubes (CNTs) carried out in process step (a) is effected by means of high-pressure shear dispersing; and/or
**in that** the carbon nanotubes (CNTs) are used in a concentration of from 0.01 to 20% by weight, based on the resulting dispersion or solution; and/or
**in that** the production of the dispersion or solution in process step (a) is carried out by stepwise or batchwise addition of the carbon nanotubes (CNTs) into the continuous liquid phase.

4. Process according to any of the preceding process steps, **characterized**
**in that** the process step (a) is carried out in the presence of at least one dispersing agent (dispersant), where the dispersing agent (dispersant) is used in amounts of from 10 to 300% by weight, based on the carbon nanotubes (CNTs), and/or the dispersing agent (dispersant) is selected from the group consisting of wetting agents and surfactants and/or the dispersing agent (dispersant) has a number average molecular mass of at least 1000 g/mol; and/or
**in that** process step (a) is carried out in the presence of at least one antifoam selected from the group consisting of mineral oil-based or silicone-based antifoams and/or in amounts of from 0.1 to 300% by weight, based on the carbon nanotubes (CNTs) and/or in amounts of from 0.01 to 20% by weight, based on the dispersion or solution.

5. Process according to any of the preceding process steps, **characterized**
**in that** an aqueous, organic or aqueous-organic solvent or dispersion medium is used as continuous liquid phase and/or in that a solvent or dispersion medium which is present in the liquid state under dispersing or solubilizing conditions is used as continuous liquid phase; and/or
**in that** the continuous phase has a boiling point at atmospheric pressure (101.325 kPa) in the temperature range from 20 to 300°C; and/or
**in that** the introduction of the dispersion or solution of carbon nanotubes (CNTs) produced in process step (a) is carried out at a transport pressure of from 2 to 100 bar.

6. Process according to any of the preceding claims, **characterized**
**in that** the extrusion apparatus is configured as a screw extruder; and/or
**in that** the extrusion apparatus is divided into a plurality of sections comprising a first section for introduction of the at least one polymer, followed by a melting section for melting the polymer, in turn followed by an introduction section for introducing the dispersion or solution of the carbon nanotubes (CNTs), in turn followed by a homogenization and degassing section which is in turn adjoined by a discharge section.

7. Process according to any of the preceding claims, **characterized in that** the carbon nanotubes (CNTs) are incorporated in amounts of from 0.001 to 20% by weight, based on the composite composed of polymer and carbon nanotubes (CNTs).

8. Process according to any of the preceding claims, **characterized**
• **in that** the carbon nanotubes (CNTs) used are selected from among single-walled carbon nanotubes (SWCNTs or SWNTs) and multiwalled carbon nanotubes (MWCNTs or MWNTs) and/or
• **in that** the carbon nanotubes (CNTs) used have average internal diameters of from 0.4 to 50 nm and/or
• **in that** the carbon nanotubes (CNTs) used have average external diameters of from 1 to 60 nm and/or
• **in that** the carbon nanotubes (CNTs) used have average lengths of from 0.01 to 1000 µm and/or
• **in that** the carbon nanotubes (CNTs) used have a tensile strength per carbon nanotube of at least one 1 GPa and/or
• **in that** the carbon nanotubes (CNTs) used have a modulus of elasticity per carbon nanotube of at least 0.1 TPa and/or
• **in that** the carbon nanotubes (CNTs) used have a thermal conductivity of at least 500 W/mK and/or
• **in that** the carbon nanotubes (CNTs) used have an electrical conductivity of at least 10³ S/cm and/or
• **in that** the carbon nanotubes (CNTs) used have a bulk density in the range from 0.01 to 0.3 g/cm³.

9. Process according to any of the preceding claims, **characterized in that** the carbon nanotubes used are of the cylinder type, scroll type or of the type having an onion-like structure and/or are single-walled or multiwalled and/or **in that** the carbon nanotubes (CNTs) used have a ratio of length to external diameter of ≥ 5 and/or **in that** the carbon nanotubes (CNTs) are used in the form of agglomerates, where the agglomerates have an average diameter in the range from 0.05 to 5 mm, and/or **in that** the carbon nanotubes (CNTs) used have an average diameter of from 3 to 100 nm and/or **in that** the carbon nanotubes (CNTs) are selected from the scroll type having a plurality of graphene layers which are assembled to form a stack or rolled up.

10. Process according to any of the preceding claims, **characterized in that** the process is carried out continuously or semicontinuously, where process step (a) is carried out discontinuously and/or the subsequent process steps (b) and (c) are carried out continuously.

11. Composite which comprises firstly at least one polymer and secondly carbon nanotubes (CNTs) and can be obtained by a process according to any of the preceding claims.

12. Composite according to Claim 11,
comprising firstly at least one polymer and secondly carbon nanotubes (CNTs), where the composite has a content of carbon nanotubes (CNTs) of from 0.001 to 20% by weight, based on the composite; and/or
comprising at least one dispersing agent (dispersant) in amounts of from 0.01 to 300% by weight based on the carbon nanotubes (CNTs).

13. Composite according to any of the preceding claims,
comprising at least one antifoam in amounts of from 0.01 to 200% by weight, based on the carbon nanotubes (CNTs); and/or
**characterized by** a surface resistance of less than 10⁸ ohm; and/or
**characterized by** a volume resistance of less than 10¹² ohm · cm.

14. Use of the composite according to any of the preceding claims in the field of electronics and electrical engineering, computer, semiconductor and measurement technology and industry, aerospace technology, the packaging industry, the automobile industry and refrigeration technology.

15. Use of a composite according to any of the preceding claims for producing conducting or semiconducting parts, components, structures or devices for the field of electronics and electrical engineering, computer, semiconductor and measurement technology and industry, aerospace technology, the packaging industry, the automobile industry and refrigeration technology.

## Revendications

1. Procédé pour la préparation d'un matériau composite à base d'au moins un polymère d'une part et de nanotubes de carbone (NTC) d'autre part, le procédé comprenant les étapes de procédé suivantes :
(a) préparation d'une dispersion ou d'une solution de nanotubes de carbone (NTC) dans une phase liquide continue par dispersion ou solubilisation de nanotubes de carbone (NTC) dans un dispersant ou un solvant,
la préparation de la dispersion ou de la solution dans l'étape de procédé (a) ayant lieu par mélange dans la phase continue avec introduction de pression et/ou d'ultrasons et les nanotubes de carbone (NTC) étant utilisés en une concentration de 0,001 à 30% en poids, par rapport à la dispersion ou la solution résultante ; puis
(b) introduction de la dispersion ou de la solution de nanotubes de carbone (NTC) préparée dans l'étape de procédé (a) dans la masse fondue d'au moins un polymère avec homogénéisation et élimination de la phase continue,
l'introduction de la dispersion ou de la solution de nanotubes de carbone (NTC) préparée dans l'étape de procédé (a) dans la masse fondue du polymère ayant lieu au moyen d'une pompe de refoulement et/ou de dosage mise sous pression et à une vitesse de dosage constante et/ou une précision de dosage constante,
l'étape de procédé (b) ayant lieu dans un dispositif d'extrusion, le dispositif d'extrusion présentant des dispositifs de mélange pour l'homogénéisation de la dispersion ou de la solution de nanotubes de carbone (NTC) préparée dans l'étape de procédé (a) avec la masse fondue du polymère et un dispositif de dégazage en vue de l'élimination de la phase continue, et
une teneur résiduelle en phase continue d'au plus 1% en poids, par rapport au produit fini, étant réglée ; puis
(c) refroidissement du mélange, obtenu dans l'étape de procédé (b), de polymère fondu et de nanotubes de carbone (NTC) jusqu'à la solidification du polymère et obtention consécutive d'un matériau composite qui comprend au moins un polymère et des nanotubes de carbone (NTC).

2. Procédé selon la revendication 1, **caractérisé en ce qu'**on utilise comme polymère un polymère thermoplastique, choisi dans le groupe formé par les polyamides, les polyacétates, les polycétones, les polyoléfines, les polycarbonates, les polystyrènes, les polyesters, les polyéthers, les polysulfones, les polyfluoropolymères, les polyuréthanes, les polyamidimides, les polyarylates, les polyarylsulfones, les polyéthersulfones, les poly(sulfures d'aryle), les poly(chlorures de vinyle), les polyétherimides, les polytétrafluoroéthylènes, les polyéthercétones, les polylactates ainsi que leurs mélanges et leurs copolymères ; et/ou **en ce que** le polymère utilisé est choisi parmi les polymères thermoplastiques du groupe des polyamides ; des polyoléfines ; des poly(téréphtalates d'éthylène) (PET) et des poly(téréphtalates de butylène)(PBT) ; des élastomères thermoplastiques (TPE), des élastomères thermoplastiques à base d'oléfines (TPE-O ou TPO), des élastomères thermoplastiques réticulés à base d'oléfines (TPE-V ou TPV), des élastomères thermoplastiques à base d'uréthane (TPE-U ou TPU), des copolyesters thermoplastiques (TPE-E ou TPC), des copolymères à blocs thermoplastiques de styrène (TPE-S ou TPS), des copolyamides thermoplastiques (TPE-A ou TPA) ; de l'acrylonitrile/butadiène/styrène thermoplastique (ABS) ; des polylactates (PLA) ; des poly((méth)acrylates de méthyle) (PMA ou PMMA) ; des poly(sulfures de phénylène)(PPS) ; ainsi que leurs mélanges et copolymères.

3. Procédé selon l'une quelconque des revendications précédentes, **caractérisé en ce que** la dispersion ou la solubilisation des nanotubes de carbone (NTC) réalisée dans l'étape de procédé (a) a lieu dans un broyeur à billes à agitateur et/ou sous introduction d'ultrasons et/ou **en ce que** la dispersion ou la solubilisation des nanotubes de carbone (NTC) réalisée dans l'étape de procédé (a) a lieu par dispersion par cisaillement sous haute pression ; et/ou en ce que les nanotubes de carbone (NTC) sont utilisés en une concentration de 0,01 à 20% en poids, par rapport à la dispersion ou la solution résultante ; et/ou **en ce que** la préparation de la dispersion ou de la solution dans l'étape de procédé (a) a lieu par addition pas à pas ou par charges des nanotubes de carbone (NTC) dans la phase continue liquide.

4. Procédé selon l'une quelconque des étapes de procédé précédentes, **caractérisé en ce que** l'étape (a) est réalisée en présence d'au moins un dispersant, le dispersant étant utilisé en des quantités de 10 à 300% en poids, par rapport aux nanotubes de carbone (NTC) et/ou le dispersant étant choisi dans le groupe des agents mouillants et tensioactifs et/ou le dispersant présentant une masse moléculaire numérique moyenne d'au moins 1000 g/mole ; et/ou **en ce que** l'étape de procédé (a) est réalisée en présence d'au moins un antimousse, choisi dans le groupe des antimousses à base d'huile minérale ou de silicone et/ou en des quantités de 0,1 à 300% en poids, par rapport aux nanotubes de carbone (NTC) et/ou en des quantités de 0,01 à 20% en poids, par rapport à la dispersion ou à la solution.

5. Procédé selon l'une quelconque des étapes de procédé précédentes, **caractérisé en ce qu'**on utilise comme phase continue liquide un solvant ou un dispersant aqueux, organique ou aqueux-organique et/ou en ce qu'on utilise comme phase continue liquide un solvant ou un dispersant se trouvant dans un état liquide dans les conditions de dispersion ou de solubilisation ; et/ou **en ce que** la phase continue présente, à la pression atmosphérique (101,325 kPa), un point d'ébullition dans la plage de température de 20 à 300°C ; et/ou **en ce que** l'introduction de la dispersion ou de la solution de nanotubes de carbone (NTC) préparée dans l'étape de procédé (a) a lieu à une pression de refoulement de 2 à 100 bars.

6. Procédé selon l'une quelconque des revendications précédentes, **caractérisé en ce que** le dispositif d'extrusion est réalisé sous forme d'une extrudeuse à vis sans fin ; et/ou **en ce que** le dispositif d'extrusion est réparti en plusieurs sections, comprenant une première section pour l'introduction dudit au moins un polymère, suivie d'une section de fusion pour fondre le polymère, à son tour suivie d'une section d'introduction pour introduire la dispersion ou la solution des nanotubes de carbone (NTC), à nouveau suivie d'une section d'homogénéisation et de dégazage, qui est à son tour suivie d'une section d'évacuation.

7. Procédé selon l'une quelconque des revendications précédentes, **caractérisé en ce que** les nanotubes de carbone (NTC) sont incorporés en des quantités de 0,001 à 20% en poids, par rapport au matériau composite constitué de polymère et de nanotubes de carbone (NTC).

8. Procédé selon l'une quelconque des revendications précédentes, **caractérisé**
- **en ce que** les nanotubes de carbone (NTC) utilisés sont choisis parmi les nanotubes de carbone à paroi simple (SWCNT ou, selon le cas SWNT) ou les nanotubes de carbone multi-parois (MWCNT ou, selon le cas MWNT) et/ou
- **en ce que** les nanotubes de carbone (NTC) utilisés présentent un diamètre interne moyen de 0,4 à 50 nm et/ou
- **en ce que** les nanotubes de carbone (NTC) utilisés présentent un diamètre externe moyen de 1 à 60 nm et/ou
- **en ce que** les nanotubes de carbone (NTC) utilisés présentent des longueurs moyennes de 0,01 à 1000 µm et/ou
- **en ce que** les nanotubes de carbone (NTC) utilisés présentent une résistance à la traction par nanotube de carbone d'au moins 1 GPa et/ou
- **en ce que** les nanotubes de carbone (NTC) utilisés présentent un module d'élasticité par nanotube de carbone d'au moins 0,1 TPa et/ou
- **en ce que** les nanotubes de carbone (NTC) utilisés présentent une conductibilité thermique d'au moins 500 W/mK et/ou
- **en ce que** les nanotubes de carbone (NTC) utilisés présentent une conductibilité électrique d'au moins 10³ S/cm et/ou
- **en ce que** les nanotubes de carbone (NTC) utilisés présentent une densité apparente dans la plage de 0,01 à 0,3 g/cm³.

9. Procédé selon l'une quelconque des revendications précédentes, **caractérisé en ce que** les nanotubes de carbone utilisés sont du type cylindrique, du type spirale ou du type à structure en pelure d'oignon et/ou réalisés à paroi simple ou à multi-parois et/ou **en ce que** les nanotubes de carbone (NTC) utilisés présentant un rapport longueur à diamètre externe ≥ 5 et/ou **en ce que** les nanotubes en carbone (NTC) sont utilisés sous forme d'agglomérats, les agglomérats présentant un diamètre moyen dans la plage de 0,05 à 5 mm, et/ou **en ce que** les nanotubes de carbone (NTC) utilisés présentent un diamètre moyen de 3 à 100 nm et/ou **en ce que** les nanotubes de carbone (NTC) sont choisis parmi ceux du type spirale présentant plusieurs couches de graphène, qui réunies en pile ou enroulées.

10. Procédé selon l'une quelconque des revendications précédentes, **caractérisé en ce que** le procédé est réalisé en continu ou de manière semi-continue, l'étape de procédé (a) étant réalisée de manière discontinue et/ou les étapes de procédés consécutives (b) et (c) étant réalisées de manière continue.

11. Matériau composite, comprenant au moins un polymère d'une part et des nanotubes de carbone (NTC) d'autre part, pouvant être obtenu par un procédé selon l'une quelconque des revendications précédentes.

12. Matériau composite selon la revendication 11, comprenant au moins un polymère d'une part et des nanotubes de carbone (NTC) d'autre part, le matériau composite présentant une teneur en nanotubes de carbone (NTC) de 0,001 à 20% en poids, par rapport au matériau composite ; et/ou
comprenant au moins un dispersant en des quantités de 0,01 à 300% en poids, par rapport aux nanotubes de carbone (NTC).

13. Matériau composite selon l'une quelconque des revendications précédentes,
comprenant au moins un antimousse en des quantités de 0,01 à 200% en poids, par rapport aux nanotubes de carbone (NTC) ; et/ou
**caractérisé par** une résistance superficielle inférieure à 10⁸ Ohms ; et/ou
**caractérisé par** une résistance de contact (résistance en volume) inférieure à 10¹² Ohms * cm.

14. Utilisation du matériau composite selon l'une quelconque des revendications précédentes dans le domaine de l'électronique et de l'électrotechnique, dans la technique et l'industrie informatique, des semi-conducteurs et de la mesure, dans la technique aéronautique et aérospatiale, dans l'industrie d'emballage, dans l'industrie automobile ainsi que dans la technique de refroidissement.

15. Utilisation d'un matériau composite selon l'une quelconque des revendications précédentes pour la fabrication de pièces, de composants, de structures ou de dispositifs conducteurs ou semi-conducteurs pour le domaine de l'électronique et de l'électrotechnique, la technique et l'industrie informatique, des semi-conducteurs et de la mesure, la technique aéronautique et aérospatiale, l'industrie d'emballage, l'industrie automobile ainsi que la technique de refroidissement.
